# EUROPEAN PATENT APPLICATION

(11) **EP 4 265 130 A1**
(43) Date of publication of application: **25.10.2023**
(21) Application number: 21906467.2
(22) Date of filing: 08.12.2021
(51) Int. Cl.: A24D 3/04, A24D 3/17

(54) **FILTER CAPSULE FOR FLAVOR INHALATION ARTICLE, FILTER FOR FLAVOR INHALATION ARTICLE, HEATING-TYPE FLAVOR INHALATION ARTICLE, COMBUSTIBLE-TYPE FLAVOR INHALATION ARTICLE, AND NON-COMBUSTIBLE, NON-HEATING-TYPE FLAVOR INHALATION ARTICLE**

(30) Priority: 17.12.2020 JP 2020208959
(71) Applicant: Japan Tobacco Inc., Tokyo 105-6927 (JP)
(72) Inventor: SAKURAI, Toru, Tokyo 130-8603 (JP)
(74) Representative: Hoffmann Eitle
(86) International application number: PCT/JP2021/045181
(87) International publication number: WO 2022/131104

(57) **Abstract**

A filter capsule for a flavor inhalation article includes a capsule shell encapsulating a content, and having fine irregularities on an outer surface of the capsule shell; and a fine powder deposited on a part of the outer surface of the capsule shell. On the outer surface of the capsule shell, a projection and a recess which is adjacent to the projection and is recessed with respect to the projection are repeated at random. The fine powder is deposited in a part of the recess of the outer surface of the capsule shell. In the part of the recess in which the fine powder is deposited, a particle size of the fine powder as observed with a microscope is smaller than a depth of the recess with respect to a top of the projection on the outer surface of the capsule shell. In a state where the capsule shell with the fine powder deposited on the outer surface is embedded in a filter material of a filter for a flavor inhalation article, the capsule shell is deformed in accordance with an external force applied in a direction intersecting a longitudinal direction of the filter for a flavor inhalation article.

## Description

### FIELD

The present invention relates generally to a filter capsule for a flavor inhalation article, a filter for a flavor inhalation article, a heating-type flavor inhalation article, a combustible-type flavor inhalation article, and a non-combustible, non-heating-type flavor inhalation article.

### BACKGROUND

A soft capsule in which a content is sealed is embedded in, for example, a filter for a flavor inhalation article. In general, a user applies an external force to the capsule in the filter by pressing the filter with a finger toward the central axis of the filter from a direction intersecting the central axis of the filter or by biting the filter to deform and crush the capsule.

### CITATION LIST

### PATENT LITERATURE

[Patent Literature 1] WO 2019/130500
[Patent Literature 2] WO 2014/171433

### SUMMARY

An object of the present invention is to provide a filter capsule for a flavor inhalation article, which is easily crushed by an external force applied by a user from an outside of the filter, a filter for a flavor inhalation article including the capsule, a heating-type flavor inhalation article including the filter for a flavor inhalation article, a combustible-type flavor inhalation article including the filter for a flavor inhalation article, and a non-combustible, non-heating-type flavor inhalation article including the filter.

According to an aspect, a filter capsule for a flavor inhalation article includes: a capsule shell encapsulating a content, and having fine irregularities on an outer surface of the capsule shell; and a fine powder deposited on a part of the outer surface of the capsule shell. On the outer surface of the capsule shell, a projection and a recess which is adjacent to the projection and is recessed with respect to the projection are repeated at random. The fine powder is deposited in a part of the recess of the outer surface of the capsule shell. In the part of the recess in which the fine powder is deposited, a particle size of the fine powder as observed with a microscope is smaller than a depth of the recess with respect to a top of the projection on the outer surface of the capsule shell. In a state where the capsule shell with the fine powder deposited on the outer surface is embedded in a filter material of a filter for a flavor inhalation article, the capsule shell is deformed in accordance with an external force applied in a direction intersecting a longitudinal direction of the filter for a flavor inhalation article.

### BRIEF DESCRIPTION OF DRAWINGS

FIG. 1 is a schematic view of a combustible-type flavor inhalation article or a heating-type flavor inhalation article.
FIG. 2 is a longitudinal cross-sectional view of a flavor inhalation article including a filter with a capsule embedded in a mono filter plug (filter material).
FIG. 3 is a diagram showing an amount of fine powder applied during production to capsule shells of 50 g in which a content is encapsulated and an amount of fine powder applied to the entirety of each capsule during the production (Comparative Example, and Examples 1-1 to 1-5).
FIG. 4 is a view in which the upper half shows images of capsules of Example 1-1 to Example 1-5 and the lower half shows enlarged images of a capsule shell of a certain capsule corresponding to Example 1-1 to Example 1-5.
FIG. 5 is a laser microscope image showing a state in which calcium carbonate is deposited on some of the recesses of an outer surface of the capsule shell.
FIG. 6 is a view in which the left part of each of Example 1-1 to Example 1-5 is a two-dimensional laser microscope image (top view) of the outer surface of the capsule shell and the right part of each of Example 1-1 to Example 1-5 is a three-dimensional laser microscope image (perspective view) of the outer surface of the capsule shell at the position corresponding to the left part.
FIG. 7 is a graph showing surface roughnesses (an arithmetic average roughness Ra and a maximum height roughness Rz) of the outer surfaces of the capsule shells with respect to the amount of calcium carbonate deposited on the capsule shells during the production.
FIG. 8 is a graph showing roughness at arbitrary positions in a range within 0.6 mm on the outer surface of the capsule shell.
FIG. 9 is a schematic view showing a state in which calcium carbonate is deposited in recesses of the outer surface of the capsule shell and one fiber of the filter plug is in contact with the outer surface of the capsule shell.
FIG. 10A is a schematic view showing a relationship between a fiber bundle of tow (filter material) of the filter plug and the capsule shell before the filter plug is deformed toward the central axis.
FIG. 10B is a schematic view showing a relationship between the fiber bundle of the tow of the filter plug and the capsule shell when an external force is applied to an outer peripheral surface of the filter plug toward the central axis to deform the fiber bundle of the tow of the filter plug.
FIG. 11A is a longitudinal cross-sectional view taken along line XIA-XIA in FIG. 11B, showing a fixture for use in a push-in method in which a capsule is pressed from one end (upper end) of a through hole formed in a filter toward the other end (lower end) of the through hole to pass the capsule through the filter.
FIG. 11B is a cross-sectional view taken along line XIB-XIB in FIG. 11A.
FIG. 12 is a diagram showing amounts of fine powder applied during the production to all capsules in Comparative Example, and Examples 1-1 to 1-5 (Comparative Example, and Examples 1-1 to 1-5) and passage rates of the capsules through the filter by the push-in method.
FIG. 13 is a diagram showing amounts of fine powder applied during the production of the capsules (Comparative Example, Example 1-1, and Example 1-2) and the proportions of persons who answered that the capsules were easily crushed in a sensory test.
FIG. 14 is an image showing the presence or absence of a calcium Ca element at a certain position on the outer surface of the capsule.
FIG. 15 is a diagram showing amounts of fine powder applied to the capsules during the production, an observation mode of an electron microscope, amounts of the calcium element measured using the electron microscope, and converted weights (wt%) converted as calcium carbonate in Example 1-1, Example 1-2, Example 1-3, and Example 1-5.
FIG. 16 is a graph showing a relationship between an amount of calcium carbonate added to the capsule shells during the production of capsules and a calcium element of the capsules.
FIG. 17 is a diagram showing a mass% of each element and a proportion (%) of the number of atoms with respect to the entirety of each capsule, X-ray energy (keV), and a standard deviation σ at a certain position on the outer surfaces of the capsules on which fine powder is not deposited.
FIG. 18 is a diagram showing types and shapes of additives, names of reagents, main components, selling sources and grades, particle sizes visually observed by an SEM, Mohs hardness, and passage rates of capsules through a filter by the push-in method in the capsules of Example 2-1 to Example 2-10 in which the amount of fine powder applied to the entirety of each capsule during the production is constant at 1000 ppm.
FIG. 19 is a diagram showing types and shapes of additives, names of reagents, main components, selling sources and grades, particle sizes visually observed by the SEM, Mohs hardness, and passage rates of capsules through a filter by the push-in method in the capsules of Comparative Examples 2-1 to 2-7 in which the amount of fine powder applied to the entirety of each capsule during the production is constant at 1000 ppm.
FIG. 20 is a diagram showing passage rates by the push-in method and remarks with respect to the amounts of fine powder applied during the production (Comparative Example, Example 3-1 to Example 3-7).
FIG. 21 is a graph showing a surface coverage of the fine powder with respect to an amount (addition concentration) of the fine powder applied to the entirety of each capsule during the production.
FIG. 22 is a graph showing a surface coverage of the fine powder with respect to a calcium element proportion in the elements near the capsule shells (coating).
FIG. 23 is a schematic diagram showing detected elements and element proportions in Example 2-1, Example 2-2, Example 2-3, Example 2-10, and Comparative Example 2-2.
FIG. 24 is a diagram showing passage rates by the push-in method with respect to the presence or absence of a release agent/coat and the presence or absence of the fine powder in a surface treatment agent for the capsule shells during the production.
FIG. 25A is a longitudinal cross-sectional view of a flavor inhalation article including a filter with a capsule embedded in a filter plug on a mouthpiece side of dual filter plugs.
FIG. 25B is a longitudinal cross-sectional view of a flavor inhalation article including a filter with a capsule embedded (sandwiched) between filter plugs of dual filter plugs.
FIG. 26 is a schematic partial cross-sectional view showing a heating-type flavor inhalation article system including a heating-type flavor inhalation article.
FIG. 27 is a schematic sectional view showing a non-combustible, non-heating-type flavor inhalation article including a filter for a flavor inhalation article.

### DESCRIPTION OF EMBODIMENTS

Hereinafter, an embodiment of the present invention will be described with reference to the drawings.

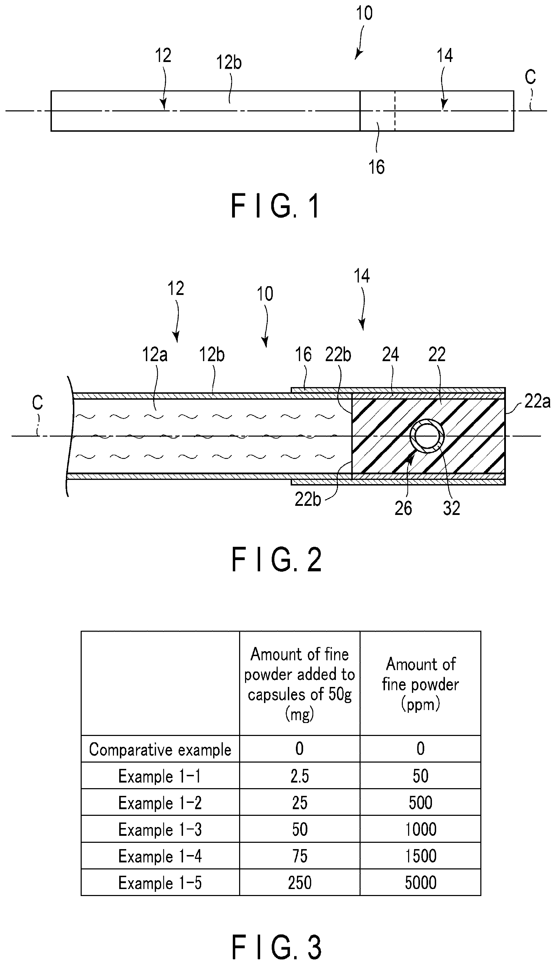

FIG. 1 shows a schematic view of a combustible-type or heating-type flavor inhalation article (cigarette) 10. FIG. 2 shows a longitudinal cross-sectional view of a flavor inhalation article 10 having a filter 14 including a capsule 26.

As shown in FIGS. 1 and 2, the flavor inhalation article 10 includes a rod (aerosol-generating rod) 12 including a filler (shredded leaves, cigarette) 12a and a wrapping paper 12b wrapped around the filler 12a, a filter 14 for a flavor inhalation article provided adjacent to the rod 12, and a tipping paper 16 wrapped around outer peripheries of the rod 12 and the filter 14 so as to connect the rod 12 and the filter 14.

The filter 14 of the flavor inhalation article 10 shown in FIG. 2 includes a single filter plug (mono filter plug) 22, a filter wrapping paper 24 wrapped around an outer periphery of the filter plug 22, and a capsule 26 whose entire periphery is embedded in the filter plug 22 of the filter 14. The filter 14 is preferably formed such that the length along the central axis (longitudinal direction) C is longer than the diameter of the filter 14. The capsule 26 is present between one end (mouthpiece end) 22a and the other end (end on the rod 12 side) 22b of one filter plug 22. The capsule 26 is preferably disposed on a central axis C of the filter 14. The filter wrapping paper 24 shown in FIG. 2 is not necessarily required because of the presence of the tipping paper 16.

As the filter plug 22 of the filter 14 shown in FIG. 2, for example, tow made of synthetic fibers (also simply referred to as "tow") or a material such as paper processed into, for example, a cylindrical shape can be used as long as the filter plug 22 has functions as a general filter plug 22. The filter plug 22 is used as a filter material.

The general functions of the filter plug 22 include, for example, adjustment of the amount of air to be mixed when inhaling an aerosol or the like, adjustment of the taste, adjustment of the amount of flavor and taste components, the amount of tar, and the like. The filter plug 22 does not necessarily need to have all of these functions. The filter plug 22 may be configured to be able to perform some of the functions described above.

The shape of the filter plug 22 is preferably substantially cylindrical. For this reason, it is preferable that the cross-sectional shape of the cross section orthogonal to the central axis C of the filter plug 22 be substantially circular. The diameter of the circle can be changed as appropriate in accordance with the size of the product (the combustible-type flavor inhalation article 10 or the heating-type flavor inhalation article 10), but is usually preferably 5.0 mm or more and 8.0 mm or less. The perimeter of the cross-sectional shape of the cross section orthogonal to the central axis C of the filter plug 22 may be appropriately changed in accordance with the size of the product, but is usually more preferably about 16 mm to 25 mm.

If the cross-sectional shape of the filter plug 22 is not circular, the aforementioned diameter is assumed to be a diameter of a circle having the same area as that of the non-circular cross section. The cross-sectional shape of the filter plug 22 is not limited to a circle, an ellipse, or the like, and an appropriate shape can be adopted.

The length of the filter plug 22 in the axial direction along the central axis C can be appropriately changed depending on the filter 14. The length of the filter plug 22, which is a mono-filter, in the axial direction along the central axis C is preferably 4.0 mm or more and 30.0 mm or less. The length of the filter 14 shown in FIGS. 1 and 2 along the central axis C may be at least equal to or greater than the diameter of the capsule 26. In the example shown in FIG. 2, the length of the filter 14 including the filter wrapping paper 24 along the central axis C substantially coincides with the length of the filter plug 22 along the central axis C.

The density of the filter plug 22 is not particularly limited, but is usually preferably 0.25 g/cm³ or more and 0.41 g/cm³ or less.

The draw resistance of the filter plug 22 is not particularly limited, but is usually preferably 100 mmH₂O/120 mm or more and 600 mmH₂O/120 mm or less.

Ventilation of the filter 14 may be accomplished in any suitable manner; for example, the filter wrapping paper 24 and/or tipping paper 16 may be utilized as a pre-perforated wrapping material or an air permeable wrapping material. In addition, for ventilation of the filter 14, holes formed by laser perforation in the filter wrapping paper 24 and/or the tipping paper 16 can be used. The tipping paper 16 is preferably air-permeable and may be provided with vents. In an air-permeable product in which both the filter wrapping paper 24 and the tipping paper 16 are present, the position of the ventilation portion of the tipping paper 16 is preferably aligned with the position of the ventilation portion of the filter wrapping paper 24. The vents passing through the filter wrapping paper 24 or through the tipping paper 16, or through both at the same time, may be formed by laser perforation during production of the filter 14.

The cross-sectional shape of each fiber forming the tow of the filter plug 22 is not particularly limited, and may be, for example, an appropriate shape other than a circle or an ellipse. The filament denier of the tow filter is not particularly limited, and is usually preferably 1 denier (g/9000m) or more and 20 deniers or less. The total denier of the tow filter is not particularly limited, and is preferably, for example, 5000 denier or more and 50000 denier or less.

The filter plug 22 may can be configured by a filter material of tow (acetate tow) formed of acetate (cellulose acetate) fibers. The filter 14 may be composed of only a filter material. Therefore, in the filter 14, the filter wrapping paper 24 may not be wrapped around the outer periphery of the filter plug 22. With reference to FIGS. 1 and 2, an example in which the filter wrapping paper 24 is wrapped around the outer periphery of the filter plug 22 will be described.

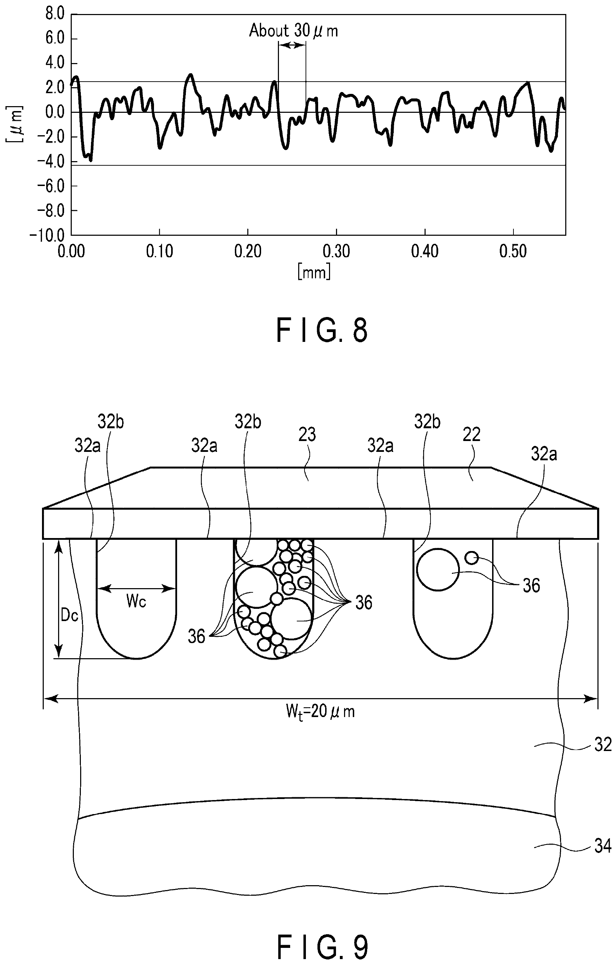

As the acetate tow, for example, one having a filament denier of 1.5 deniers to 15.0 deniers is used. In this case, the fiber width (fiber diameter) of one filter plug 22 can be calculated to be 10 µm to 50 µm by, for example, a laser scanning method. Each fiber of the filter plug 22 has a fiber width greater than that of a recess 32b of a capsule shell 32, which will be described later. The fiber width Wt of one fiber 23 of the filter plug 22 in FIG. 9 is, for example, 20 µm.

The filter plug 22 may have, for example, a total denier of acetate tow of 10000 deniers to 44000 deniers, 830 fibers to 23500 fibers, and a draw resistance of 100 mmH₂O/120 mm to 600 mmH₂O/120 mm. As the filter plug 22, a plasticizer such as triacetin may be added to the acetate tow. The plasticizer can be added in an amount of 6 wt% to 10 wt% with respect to the weight of the acetate tow as the filter plug 22. If activated carbon is added to the acetate tow as the filter plug 22, the plasticizer can be added in an amount of 2 wt% to 20 wt% with respect to the weight of the acetate tow.

The type of tow used for the tow filter of the filter plug 22 is not particularly limited, and in addition to acetate tow, for example, cellulose rayon tow, vinylon tow, or the like can be used. For these tows, a single material may be used, or two or more kinds of materials may be used in combination.

At least one of the filter wrapping paper 24 or the tipping paper 16 has a density of 0.5 g/cm³ to 1.0 g/cm³ and a thicknesses of 100 µm to 250 µm. Paper having a density of 0.5 g/cm³ to 1.0 g/cm³ and a thicknesses of 100 µm to 250 µm is denser and thicker than papers generally used for the filter wrapping paper 24 or the tipping paper 16. Such a density and a thickness preferably provide high capsule crushing performances.

If paper having a density of 0.5 g/cm³ to 1.0 g/cm³ and a thickness of 100 µm to 250 µm is used as the filter wrapping paper 24, the basis weight of the filter wrapping paper 24 may be, for example, 50 g/m² to 250 g/m², and the air permeability of the filter wrapping paper 24 may be, for example, 0 CU (Coresta Unit) to 30000 CU.

The user can recognize the presence and the position of the capsule 26 in the filter 14 by lightly pressing with fingers or lightly biting the outer peripheral surface of the filter 14 wrapped in the tipping paper 16 toward the central axis C. The user can crush the capsule 26 by pressing with fingers or biting the outer peripheral surface of the tipping paper 16 at the position where the capsule 26 is present. After crushing the capsule 26, the user can recognize that the capsule 26 has been crushed and a content 34 sealed in the capsule shell 32 has flowed out to the filter plug 22 by lightly pressing with fingers or lightly biting from the outer peripheral surface of the filter 14 toward the central axis C.

The user can crush the capsule 26 by pressing with fingers or biting from the outer peripheral surface of the filter 14 wrapped in the tipping paper 16 toward the central axis C. If the filter 14 including the tipping paper 16, the filter wrapping paper 24 wrapped in the tipping paper 16, and the filter plug 22 is too hard, a repulsive force of the tipping paper 16 and the filter 14 generated when the filter 14 burying with the capsule 26 is pressed with fingers or bitten will become too large for the user, which may cause discomfort to the user. In order to appropriately control the repulsive force from the tipping paper 16 and the filter 14 for the user, the filament denier of the filter plug 22 is more preferably 3.0 denier or more, and the total denier is more preferably 35000 denier or less, though it depends on the selected tipping paper 16 and the filter wrapping paper 24.

The capsule 26 has a soft capsule shell 32 in which the content 34 is sealed, and fine powder 36 deposited on a part of the outer surface of the capsule shell 32.

The capsule shell 32 is formed of, for example, starch, dextrin, polysaccharide, agar, gellan gum, gelatin, various natural gelling agents, glycerin, sorbitol, calcium chloride, or the like, and may further contain a flavorant or a coloring agent. It is preferable that the capsule 26 be colored so that the user can recognize the capsule 26 through the filter wrapping paper 24 or the tipping paper 16 when the capsule 26 is pressed with fingers, even if the capsule 26 is surrounded by the filter wrapping paper 24 or the tipping paper 16 having opacity. In this case, the capsule shell 32 preferably includes a colorant, such as Blue No. 1. The outer surface of the capsule shell 32 may be provided with an appropriate mark instead of coloring.

An example of the content 34 is a flavorant. As the flavorant of the content 34, any flavorant used for a smoking article, such as menthol, plant essential oils, etc. may be used. Primary examples of the flavorant include menthol, leaf tobacco extract, natural plant flavorants (for example, cinnamon, sage, herb, chamomile, kudzu, sweet tea, clove, lavender, cardamom, caryophyllus, nutmeg, bergamot, geranium, honey essence, rose oil, lemon, orange, cinnamon, caraway, jasmine, ginger, coriander, vanilla extract, spearmint, peppermint, cassia, coffee, celery, cascarilla, sandalwood, cocoa, ylang-ylang, fennel, anise, licorice, St. John's bread, plum extract, peach extract, and the like), saccharides (for example, glucose, fructose, isomerized saccharides, caramel, and the like), cocoa (powder, extract, and the like), esters (for example, isoamyl acetate, linalyl acetate, isoamyl propionate, linalyl butyrate, and the like), ketones (for example, menthone, ionone, damascenone, ethyl maltol, and the like), alcohols (for example, geraniol, linalool, anethole, eugenol, and the like), aldehydes (for example, vanillin, benzaldehyde, anisaldehyde, and the like), lactones (for example, γ-undecalactone, γ-nonalactone, and the like), animal flavorants (for example, musk, ambergris, civet, castoreum, and the like), hydrocarbons (for example, limonene, pinene, and the like). These flavorants may be used alone or in combination.

As a solvent of the content 34, a solvent suitable for the flavorant can be used, and medium chain fatty acid triglyceride (MCT) (specifically, caprylic/capric acid triglyceride), propylene glycol, water, ethanol, or the like can be used. The content 34 may further contain other additives, such as still another solvent, a pigment, an emulsifier, and a thickening agent.

The capsule shell 32 of the capsule 26 is formed in a spherical shape, for example. Here, the spherical shape includes both of a spherical body having a substantially circular cross section including the center of the capsule shell 32 and an ellipsoidal body having an ellipsoidal cross section. The capsule shell 32 preferably has the shape of a spherical body having a substantially circular cross section. In the case of a spherical body having a substantially circular cross section, the capsule shell 32 can have, for example, a diameter of about 1 mm to 8 mm. In the case of an ellipsoidal body, the maximum diameter can be about 2 mm to 8 mm, and the minimum diameter can be about 1 mm to 7 mm. If the diameter of the capsule shell 32 is too small relative to the diameter of the filter plug 22, the user has to press the filter 14, for example with fingers, a long distance in order to crush the capsule shell 32. If the capsule shell 32 is a spherical body and the filter 14 has a radius of 8.0 mm, the radius of the capsule shell 32 is more preferably 3.0 mm or more. If the capsule shell 32 is an ellipsoidal body, the minimum radius is more preferably 3.0 mm or more. It is preferable that the capsule shell 32 itself can be crushed when an external force of, for example, about 10 [N] to 70 [N] is applied.

The outer surface of the capsule shell 32 is provided with, for example, micron-level fine irregularities. The capsule shell 32 is, for example, translucent. The outer surface of the capsule shell 32 is uneven: innumerable projections 32a and innumerable recesses 32b which are recessed with respect to the projections 32a are repeatedly formed at random. That is, the outer surface of the capsule shell 32 is formed in a substantially spherical shape as a whole by a series of numerous fine irregularities.

The method of producing the capsule shell 32 for sealing the content 34 is not particularly limited. For example, using a dripping method, a capsule 26 having a seamless capsule shell 32 is produced. The capsule 26 having the capsule shell 32 is also produced by a punching method (rotary production method).

In the case of using the dropping method, a double nozzle is used, and the content 34 is discharged from an inner nozzle and a liquid film material for forming the capsule shell 32 is discharged from an outer nozzle at the same time. The film liquid for forming the capsule shell 32 is cooled while the content 34 is being sealed seamlessly.

In the case of using the punching method, the content 34 is sandwiched between a pair of film sheets for forming the capsule shell 32, and the film sheets are press-bonded to each other and punched into an appropriate shape, thereby forming the capsule shell 32 in which the content 34 is sealed. In the case of using the punching method, the capsule shell 32 can be formed not only in a spherical shape but also in various shapes such as an oval shape and an oblong shape. When the capsule shell 32 is produced in this manner, the capsule shell 32 may be formed to be transparent.

In this specification, the fine powder 36 has particle sizes (hereinafter referred to as visual particle sizes) in a range of 0.1 µm to 10.0 µm as observed with a microscope. The visual particle sizes of the fine powder 36 is smaller than the depth of the recesses 32b with respect to the top of the projections 32a on the outer surface of the capsule shell 32.

Here, the fine powder 36 to be deposited on capsule shells 32 will be described. As shown in FIG. 3, capsules 26 in which the amount of the fine powder 36 to be deposited on the capsule shells 32 was changed were prepared. To be specific, for example, capsules 26 of Comparative Example, Example 1-1, Example 1-2, Example 1-3, Example 1-4, and Example 1-5 were prepared, in which the amount of the fine powder 36 was changed with respect to 50 g of the capsule shells 32 in which the content 34 was sealed. Comparative Example includes 0 g (0 ppm, 0 wt%) of the fine powder 36, Example 1-1 includes 2.5 mg (50 ppm, 0.005 wt%) of the fine powder 36, Example 1-2 includes 25 mg (500 ppm, 0.05 wt%) of the fine powder 36, Example 1-3 includes 50 mg (1000 ppm, 0.15 wt%) of the fine powder 36, Example 1-4 includes 75 mg (1500 ppm, 0.15 wt%) of the fine powder 36, and Example 1-5 includes 250 mg (5000 ppm, 0.5 wt%) of the fine powder 36.

Here, a process of producing the capsules 26 by depositing the fine powder 36 onto the outer surfaces of the capsule shells 32 will be briefly described.

A substantially truncated cone-shaped or substantially bowl-shaped container connected to a rotor configured to rotate at a predetermined rotation speed is appropriately inclined, and the capsule shells 32 containing the content 34 are put into the container. While the container is rotated at an appropriate speed by the rotor, about 1/3 of a predetermined amount of the fine powder 36, which has been passed through a sieve made of, for example, a metal material, are applied to the capsule shells 32. Thus, the fine powder 36 is uniformly deposited on the outer surfaces of the capsule shells 32 put in the container. For example, the rotation of the container by the rotor is maintained for about one minute, and the rotor is stopped. Thereafter, about 1/3 of the predetermined amount of the sieved fine powder 36 is put into the container and deposited on the capsule shells 32, while rotating the rotor again. The rotation of the container by the rotor is maintained, for example, for about one minute, and the rotor is stopped. Thereafter, about the remaining 1/3 of the predetermined amount of the sieved fine powder 36 is put into the container and deposited on the capsule shell 32. The rotation of the container by the rotor is maintained, for example, for about one minute, and the rotor is stopped. The fine powder 36 is uniformly deposited on the outer surface of the capsule shells 32 in about five minutes in total to obtain the capsules 26 on which the fine powder 36 is deposited. The fine powder 36 which has not been deposited on the capsule shells 32 is removed when the capsules 26 are taken out from the container. Furthermore, the excess fine powder 36 of all the fine powder 36 deposited on the capsules 26 is removed from the capsules 26 by a sieve through which the fine powder 36 passes in a subsequent screening inspection process. The excess fine powder 36 is powder mainly deposited on the projections 32a. Therefore, the fine powder 36 is basically present more in the recesses 32b than on the projections 32a.

If the fine powder 36 is actually deposited on the outer surfaces of capsule shells 32 to produce the capsules 26, the fine powder 36 of, for example, 1 g to 100 g is added to an appropriate amount of the capsule shells 32 of, for example, 20 kg to produce the capsules 26.

All of the fine powder 36 in Examples 1-1 to 1-5 is not deposited in the recesses 32b of the capsule shells 32. Some of the fine powder 36 falls off from the outer surfaces of the capsule shells 32. Therefore, the amount of the fine powder 36 deposited in the recesses 32b of the capsule shells 32 is reduced from the amount thereof during production in Examples 1-1 to 1-5.

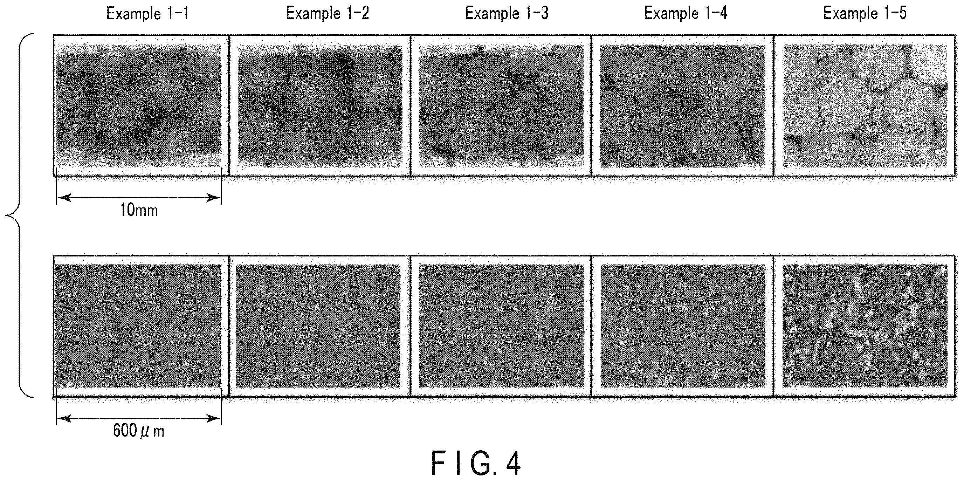

FIG. 4 shows photographs of external views of the capsules 26 of Example 1-1, Example 1-2, Example 1-3, Example 1-4, and Example 1-5. In the example shown in FIG. 4, the capsule shells 32 are translucent. The contents 34 cause the capsule shells 32 as a whole to appear substantially blue to the user. The fine powder 36 is white.

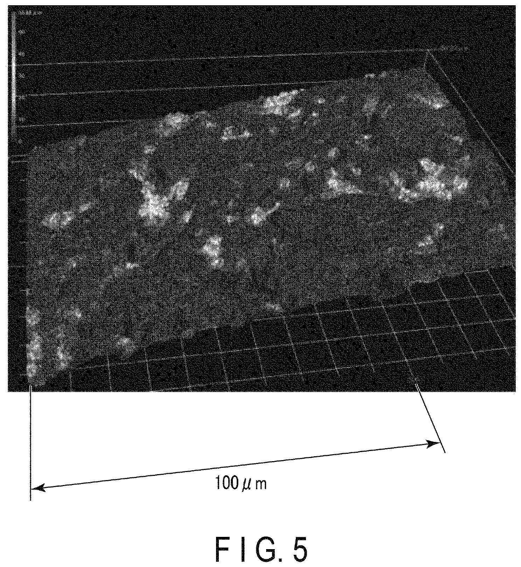

As shown in FIG. 5, the fine powder 36 is deposited in some of the recesses 32b on the outer surfaces of the capsule shells 32 of the capsules 26 thus formed. An example of the fine powder 36 is, for example, calcium carbonate (CaCO₃) particles. The primary particle diameter of calcium carbonate is, for example, 0.03 µm to 2.3 µm. Calcium carbonate as the fine powder 36 may be present on the capsule shells 32 in the form of agglomerated particles (secondary particles).

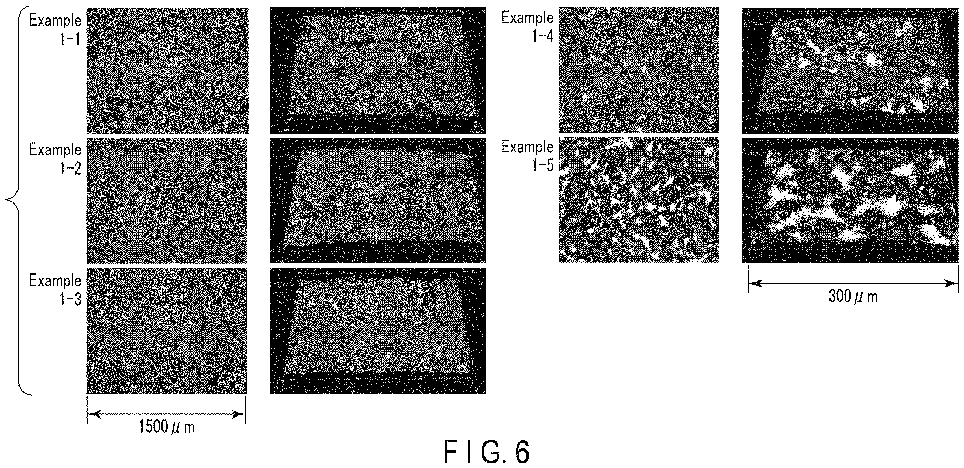

FIG. 6 shows enlarged external views of the capsules 26 of Example 1-1, Example 1-2, Example 1-3, Example 1-4, and Example 1-5, which were observed with a laser microscope. In each of Examples 1-1 to 1-5 in FIG. 6, the left figure is a top view of a position where the capsules 26 are located, and the right figure is a perspective view of the position where the capsules 26 are located. As shown in FIG. 6, as the concentration of the fine powder 36 applied to the capsule shells 32 increases, for example, from Example 1-1 to Example 1-2, from Example 1-2 to Example 1-3, from Example 1-3 to Example 1-4, and from Example 1-4 to Example 1-5, a white region in the appearance of the capsules 26 becomes gradually larger. Therefore, the amount of the fine powder 36 deposited in the recesses 32b of the capsule shells 32 also increases as the amount (concentration) of the fine powder 36 increases.

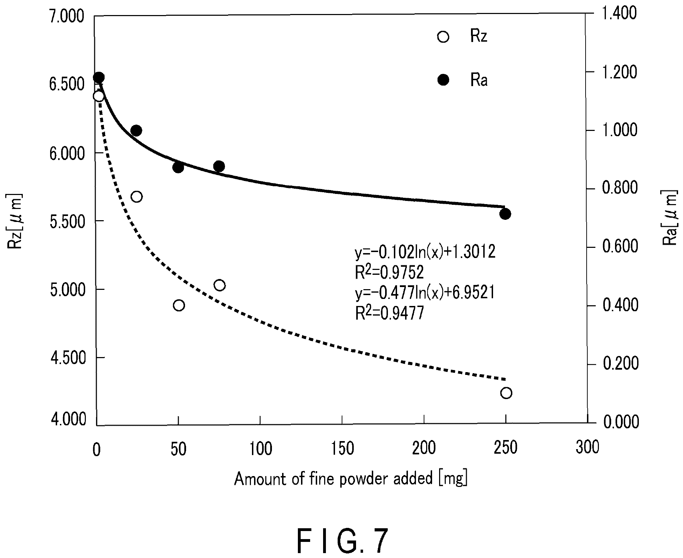

FIG. 7 shows a relationship between the amount of calcium carbonate as the fine powder 36 added to the capsule shells 32 and the surface roughnesses Ra and Rz of the outer surfaces of the capsules 26. In FIG. 7, Ra is an arithmetic average roughness, and Rz is a maximum height roughness. The arithmetic average value Ra is an average value which is obtained by extracting a part of the roughness curve measured as a reference length and based on the following measurement device, and which represents the irregularities in the extracted section:
Manufacturer: Keyence Corporation
Model: Laser microscope VK X3000
Measurement conditions
   Observation magnification: × 20
   Cutoff: λs = 2.5 µm, λc = 0.08 µm
   Reference length number: 7
   Number of profiles: 31
   Stylus mode conversion: 2 µm, 60 degrees.
The maximum height roughness Rz is a sum of a highest portion (maximum peak height Rp) and a deepest portion (maximum valley depth Rv) when the part of the roughness curve measured by the same roughness meter is extracted by the reference length. As the amount of the fine powder 36 added to the capsule shells 32 increases, the arithmetic average roughness Ra and the maximum height roughness Rz decrease. Therefore, as the addition amount of the fine powder 36 is increased, the amount of the fine powder 36 deposited on the capsule shells 32 is increased. In other words, the arithmetic average roughness of the outer surfaces of the capsule shells 32 becomes rougher as the amount of the fine powder 36 deposited on the capsule shells 32 becomes smaller.

The recess 32b of the capsule shell 32 is defined by the length of the outer surface of the capsule shell 32 in an appropriate direction (the longitudinal direction), the width in the widthwise direction intersecting the longitudinal direction, and the depth from the projection 32a on the outer surface of the capsule shell 32 toward the center of the capsule 26 (the distance between the projection 32a and the bottom of the recess 32b). The widthwise direction is a direction along the outer surface of the capsule shell 32.

The fine powder 36 is ultra-fine powder having a sufficiently small diameter as to allow entrance into the recess 32b defined by the length, width, and depth. The fine powder 36 is not deposited in all of the recesses 32b of the capsule shell 32; it suffices that an extremely small amount of the fine powder 36 may be deposited in some of the recesses 32b in the outer surface of the capsule shell 32. It is preferable that the fine powder 36 be uniformly deposited on the outer surface of the capsule shell 32, so that substantially the same amount of the fine powder 36 is deposited on the outer surface of the capsule shell 32 at any position, for example, at an arbitrary first portion of the outer surface of the capsule shell 32 or at a second portion different from the first portion.

FIG. 8 shows a roughness curve over about 0.6 mm at a position on the outer surface of the capsule shell 32. The average height (depth) Rc of a roughness curve element of the recess 32b (the average height difference between the projection 32a and the recess 32b for each portion of the capsule shell 32) is 4 µm to 5 µm. Therefore, at least particles having diameters of 1 µm to 5 µm or smaller can enter some of the recesses 32b of the capsule shell 32.

The widths of the recesses 32b of the capsule shell 32 have no relevant standard surface parameters. The inventor of the present application visually observed the data obtained from the graph shown in FIG. 8. As a result, the widths of the recesses 32b of the capsule shell 32 are about 3 µm at the minimum and about 30 µm at the maximum at a position of the reference line (horizontal axis) of the graph shown in FIG. 8. In the graph of FIG. 8, the intervals between peaks (between the projections 32a of the capsule shell 32) on the horizontal axis indicate that the recesses 32b at many positions of the capsule shell 32 have widths of, for example, 10 µm or more. Therefore, particles of the fine powder 36 having a visual particle size of, for example, 0 µm to 10 µm may enter some of the recesses 32b of the capsule shell 32.

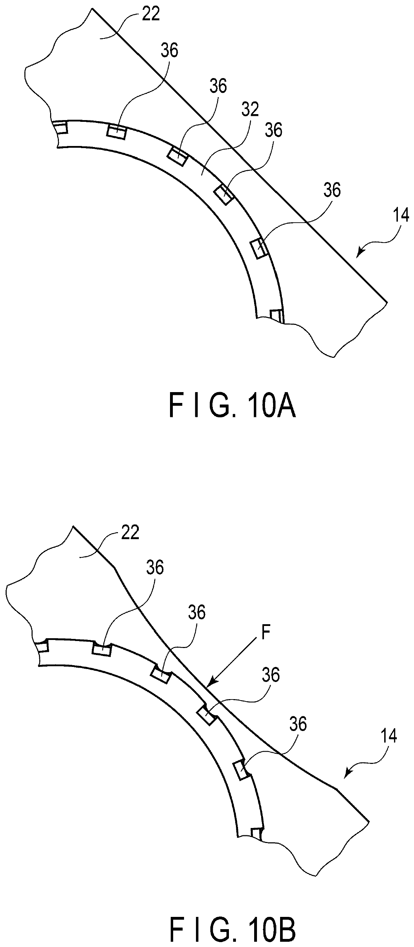

FIGS. 9 to 10B are schematic views showing a relationship between a fiber width (fiber diameter) of the fiber 23 of the tow of the filter plug 22 and an outer surface of the capsule shell 32 including the projections 32a of the capsule shell 32 and the recesses 32b of the capsule shell 32 on which the fine powder 36 is deposited. FIG. 9 shows a size in which the outer surface of the capsule shell 32 can be treated as a substantially flat surface. On the other hand, FIG. 10A and FIG. 10B each show a size of the outer surface of the capsule shell 32 as a part of a spherical surface.

FIG. 9 shows a schematic view showing a relationship between the capsule shell 32 and the fiber width (fiber diameter) Wt of the fiber 23 of the tow of the filter plug 22. The fiber 23 of the tow of the filter plug 22 has a fiber width Wt of, for example, about 20 µm. In the example shown in FIG. 9, the recesses 32b of the capsule shell 32 have a width Wc of about 3 µm and a depth Dc of about 5 µm. The visual particle sizes of the fine powder 36 is, for example, 0.2 µm to 2 µm.

FIG. 9 shows three recesses 32b in which the densities of the fine powder 36 that has entered are different. In some recesses 32b, no or substantially no fine powder 36 has entered. In some recesses 32b, a large amount of the fine powder 36 may have entered so that the density of the fine powder 36 in the recesses 32b may be high. In the fine powder 36 in the recesses 32b, primary particles and agglomerated particles (secondary particles) may be mixed.

FIG. 10A is a schematic view of a portion of the filter plug 22 and a portion of the capsule 26 in a state where no external force is applied toward the central axis C (not shown) of the filter 14. FIG. 10B is a schematic view of a portion of the filter plug 22 and a portion of the capsule 26 in a state where an external force F is applied toward the central axis C (not shown) of the filter 14.

The fiber width Wt of the fiber 23 of the tow of the filter plug 22 is, for example, 20 µm, whereas the width Wc of the recesses 32b of the capsule shell 32 is, for example, 3 µm, and the visual particle size of the fine powder 36 is, for example, 2 µm or less. Therefore, as shown in FIG. 10A, in an unloaded state in which the user does not apply an external force to the filter 14 toward the central axis C, the fiber 23 of the filter plug 22 does not come into contact with the fine powder 36 that has entered and has been deposited in the recesses 32b of the capsule shell 32, or the amount of contact is small.

When crushing the capsule 26, the user presses with fingers or bites the outside of the filter 14 to apply an external force F toward the central axis C (not shown) of the filter plug 22. It suffices that the external force F may be applied to the capsule 26 in a direction intersecting the central axis C of the filter 14 for a flavor inhalation article.

The capsule 26 having the fine powder 36 deposited on the outer surface thereof is deformed in accordance with the external force F applied in a direction intersecting the central axis C of the filter 14 for a flavor inhalation article in a state where the entire periphery of the capsule 26 is embedded in the filter plug 22 of the filter 14 for a flavor inhalation article. At this time, each fiber 23 (see FIG. 9) of the filter plug 22 is deformed from the unloaded state shown in FIG. 10A by the external force F as shown in FIG. 10B, and the fiber 23 of the filter plug 22 can come into contact with the fine powder 36 in the recesses 32b of the capsule shell 32. Therefore, in addition to the friction between each fiber 23 of the filter plug 22 and the projections 32a of the capsule shell 32, friction occurs between each fiber 23 and the fine powder 36 present on the projections 32a of the capsule shell 32. The fine powder (particles) 36 is sandwiched between the filter plug 22 and the recesses 32b of the capsule shell 32, depending on the position of the fine powder in the recesses 32b.

Here, as the fine powder 36, a material is used which increases the static frictional force rather than that generated by a direct contact between the fiber 23 of the filter plug 22 and the recesses 32b of the capsule shell 32. In other words, the fine powder (particles) 36 is made of a material that suppresses slipping of the filter plug 22 with respect to the fiber 23 more than the material that forms the capsule shell 32.

Therefore, as compared with a time before the external force is applied from the outer peripheral surface of the filter plug 22 toward the central axis C, when the external force F is applied from the outer peripheral surface of the filter plug 22 toward the central axis C, the external force F not only increases the static frictional force between each fiber 23 of the filter plug 22 and the projections 32a of the capsule shell 32 but also generates a static frictional force between each fiber 23 of the filter plug 22 and the fine powder 36. Therefore, when the user crushes the capsule 26, not only the static frictional force by the external force F but also the static frictional force between the fiber 23 of the filter plug 22 and the capsule 26 by the fine powder 36 is increased. Thus, by using the capsule 26 having the capsule shell 32 on which the fine powder 36 is deposited, when the external force F is applied from the outer peripheral surface of the filter plug 22 toward the central axis C, the capsule 26 is suppressed from slipping relative to the fiber 23 forming the tow of the filter plug 22. Accordingly, when desiring to crush the capsule 26, the user can crush the capsule 26 more reliably by pressing with fingers or biting the capsule 26.

In a case where the user crushes the capsule 26 by pressing with fingers or biting with teeth, a force is not always applied to the apex of the spherical body of the capsule 26 as in a measurement device, and a force is often applied to a position that has deviated from the apex. For example, a force is not necessarily applied toward the center of the capsule 26 from the capsule shell 32. In the case where the user crushes the capsule 26 by pressing with fingers or biting with teeth, a static frictional force is also generated between the fiber 23 of the filter plug 22 and the fine powder 36 in the recesses 32b of the capsule shell 32. Therefore, even if a force is applied to a position that has deviated from the apex of the capsule 26, the capsule 26 does not slip relative to the filter plug 22, and the force is reliably applied to the capsule 26, so that the capsule 26 can be crushed. Thus, regardless of whether the point of application of the force to the capsule 26 is the apex of the capsule 26, or deviates from the position of the apex, the capsule 26 does not easily slip when being crushed. Accordingly, when desiring to crush the capsule 26, the user can crush the capsule 26 more reliably by pressing with fingers or biting the capsule 26.

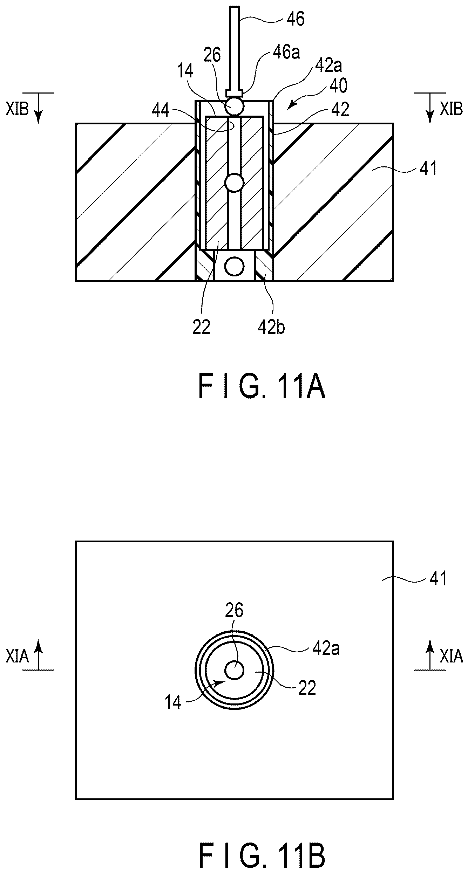

FIG. 11A and FIG. 11B are views for explaining an experiment by a push-in method in which the capsule 26 is pushed into and passed through a through hole 44 formed along the central axis C of the filter 14. A fixture 40 shown in FIGS. 11A and 11B has a pedestal 41 and a resin pipe 42 disposed so as to pass through the pedestal 41. The pedestal 41 is made of, for example, rigid urethane. The pedestal 41 is formed as, for example, 50 mm (W) × 50 mm (D) × 20 mm (H). The resin pipe 42 is disposed at a position centered on the intersection of the diagonal lines of an upper surface of the pedestal 41 in FIG. 11B. An inside diameter of the resin pipe 42 at an upper end side position (upper end side pipe) 42a is 8 mm, and an inside diameter at a lower end side position (lower end side pipe) 42b is 6 mm. The height of the upper end side position 42a of the resin pipe 42 having the inside diameter of 8 mm is equal to or longer than the length of the filter 14. In a case where the outside diameter of the filter 14 is 8 mm and the length thereof is 15 mm, the height of the upper end side position 42a of the resin pipe 42 is, for example, 20 mm. The height of the lower end side position 42b of the resin pipe 42 is, for example, 5 mm. The height of the lower end side position 42b of the resin pipe 42 having the inside diameter of 6 mm is longer than the outside diameter of the capsule 26. The outside diameter of the capsule 26 is, for example, 3.5 mm. If a bottom surface of the pedestal 41 and a lower end of the resin pipe 42 coincide with each other, the upper end of the upper end side position 42a of the resin pipe 42 protrudes upward from the upper surface of the pedestal 41. The filter 14 is supported inside the upper end side position 42a of the resin pipe 42, and is prevented from falling off through the resin pipe 42. In the filter 14, the filter wrapping paper 24 is wrapped around the outer periphery of the filter plug 22 in order to maintain the outer shape and outside diameter of the filter plug 22. For example, the filter plug 22 used here has a filament denier of 3.5 deniers, a total denier of 35000 deniers, a draw resistance of 360 nmH₂O/120 mm, and a circumferential length of about 24 mm.

As shown in FIG. 11A, the through hole 44 was formed along the central axis C of the filter plug 22 of the filter 14 by using, for example, a needle (not shown). The diameter of the through hole 44 formed in the filter plug 22 (needle diameter) is 3.0 mm.

As shown in FIG. 11A, the capsule 26 having a diameter larger than that of the through hole 44 is placed on the upper end of the through hole 44 of the filter plug 22, and the capsule 26 is pressed in one direction from the upper end to the lower end along the through hole 44 by a pressing portion 46a at the lower end of a load cell 46. At this time, the pressing speed of the capsule 26 against the filter 14 using the load cell 46 was set to a constant speed of 100 mm/min. Then, an experiment was performed to obtain a passage rate of the capsules 26 with respect to the through hole 44 of the filter 14 (a rate at which the capsules 26 passed through the through hole 44 from one end to the other end of the filter plug 22 without being crushed).

In this experiment, the load cell (piston) 46 of a rheometer (produced by Sun Scientific Co., Ltd., product number: CR-3000EX) was used to push the capsules 26 into the filter 14. By this method, it is possible to obtain the difficulty of the movement of the capsules 26 with respect to the filter plug 22 of the filter 14, and at which position of the entire length (15 mm) in the filter plug 22 the capsules 26 were crushed.

The capsule 26 is pressed against the through hole 44 of the filter plug 22 by the pressing portion 46a at the lower end of the load cell 46 of the rheometer. The pressing portion 46a at the lower end of the load cell 46 has a disk shape having a radius substantially equal to or slightly smaller than that of the through hole 44. The diameter of the pressing portion 46a is 3.0 mm.

When the capsule 26 is pressed against the upper end of the through hole 44 of the filter plug 22 by the pressing portion 46a at the lower end of the load cell 46, the capsule 26 is inserted into the through hole 44 from one end of the through hole 44. At this time, the fine powder 36 deposited onto the recesses 32b of the capsule shell 32 is brought into contact with the fibers of the inner wall of the through hole 44 of the filter plug 22.

When the capsule 26 is pressed by the pressing portion 46a of the load cell 46 of the rheometer from the upper end side to the lower end side of the through hole 44, the capsule 26 is flattened by friction against the fibers of the filter plug 22, and the inner peripheral surface (inner wall) of the through hole 44 of the filter plug 22 is pressurized. In other words, a reaction force toward the central axis C is applied from the inner peripheral surface (inner wall) of the through hole 44 of the filter plug 22 to the capsule 26.

The capsules 26 that are relatively difficult to move with respect to the through hole 44 of the filter plug 22 were crushed midway between the upper end and the lower end of the through hole 44.

The capsules 26 that are relatively easy to move with respect to the through hole 44 of the filter plug 22 moved from the upper end to the lower end of the through hole 44 without being crushed in the middle between the upper end and the lower end of the through hole 44, and passed through the lower end of the filter plug 22. In this experiment, it is preferable that the capsules 26 in which the fine powder 36 has been deposited on the capsule shells 32 be appropriately crushed in the filter plug 22.

As described above, in an experiment using the push-in method, the capsules 26 are pushed in at an appropriate speed from the upper end toward the lower end along the through hole 44 of the filter plug 22 by the pressing portion 46a of the load cell 46, and some of the fine powder 36 deposited on the capsule shells 32 is brought into contact with the fibers of the filter plug 22 by the deformation of the capsules 26. This may be understood as being different from a mechanism in which the actual filter plug 22 of the flavor inhalation article 10 is deformed toward the central axis C by an external force, and the capsule 26 is deformed and crushed through the filter plug 22 as schematically shown in FIGS. 10A and 10B. That is, actually, in the flavor inhalation article 10, the external force F is applied from the outer periphery of the filter 14 toward the central axis C to deform the fibers of the filter plug 22 and bring the fibers into contact with the fine powder 36 deposited on the capsule shell 32. However, there is no difference between the present experiment and the actual flavor inhalation article 10 in that the behavior of the filter plug 22 and the capsule 26 is obtained when the fibers of the filter plug 22 and the fine powder 36 deposited in the recesses 32b of the capsule shell 32 are brought into contact with each other. Therefore, it is possible to verify the difficulty of the movement of the capsules 26 with respect to the filter 14 by the experiment using the push-in method shown in FIGS. 11A and 11B.

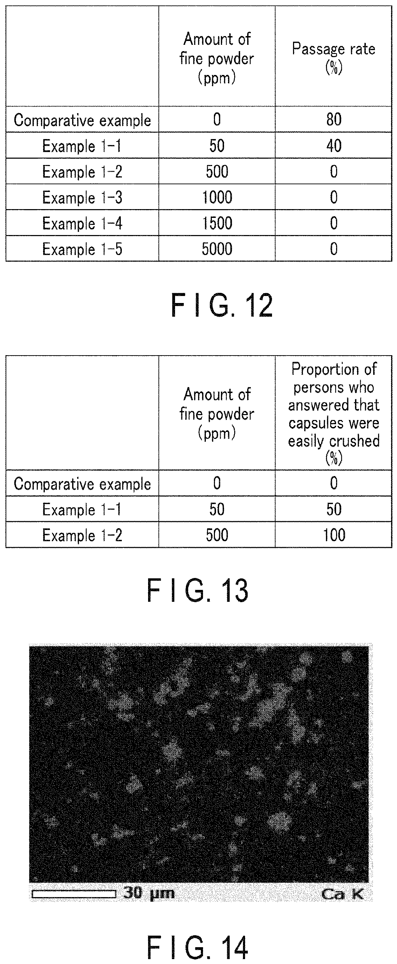

As described above, as shown in FIG. 3, the capsules 26 in which the fine powder 36 is not deposited on the outer surfaces of the capsule shells 32 are used as Comparative Example, the capsules 26 in which the fine powder 36 is applied to the outer surfaces of the capsule shells 32 at 50 ppm during the production are used as Example 1-1, the capsules 26 in which the fine powder 36 is applied to the outer surfaces of the capsule shells 32 at 500 ppm during the production are used as Example 1-2, the capsules 26 in which the fine powder 36 is applied to the outer surfaces of the capsule shells 32 at 1000 ppm during the production are used as Example 1-3, the capsules 26 in which the fine powder 36 is applied to the outer surfaces of the capsule shells 32 at 1500 ppm during the production are used as Example 1-4, and the capsules 26 in which the fine powder 36 is applied to the outer surfaces of the capsule shells 32 at 5000 ppm during the production are used as Example 1-5. It is assumed that the amounts of the fine powder 36 actually deposited on the respective capsule shells 32 of Examples 1-1 to 1-5 vary. Then, the test was performed 20 times for each of Comparative Example, Example 1-1, Example 1-2, Example 1-3, Example 1-4, and Example 1-5. The passage rates (%) of the capsules 26 with respect to the filter 14 of Comparative Example, Example 1-1, Example 1-2, Example 1-3, Example 1-4, and Example 1-5 were obtained, as shown in FIG. 12.

As for the experimental results of the push-in method, the passage rate was 80% in Comparative Example and 40% in Example 1-1. In Example 1-2, Example 1-3, Example 1-4, and Example 1-5, the passage rate was 0%. With regard to the capsules 26 on which the fine powder 36 is deposited, even if the amount of the fine powder 36 applied to the capsules 26 during the production of the capsules 26 is small, for example, 50 ppm as in Example 1-1, the passage rate of the capsules through the through hole 44 of the filter plug 22 is lower than that of the capsules of Comparative Example in which the fine powder 36 is not deposited. Thus, it is considered that the capsules 26 on which the fine powder 36 is deposited have an increased static frictional force with respect to the filter plug 22 as compared with the capsules on which the fine powder 36 is not deposited. Therefore, in the filter 14 including the capsules 26 on which even a small amount of the fine powder 36 is deposited, since the capsules 26 in the filter plug 22 do not easily slip relative to the filter plug 22, the user can more easily crush the capsules 26 by pressing with fingers or biting as compared with a filter including capsules on which the fine powder 36 is not deposited.

As described above, in the experiment using the capsules 26 of Example 1-2 produced by applying the fine powder 36 in an amount smaller than 1000 ppm on the capsule shells 32 during the production, the passage rate was 0%. Therefore, in the experiment of Example 1-2, the capsules 26 were always crushed in the through hole 44 of the filter plug 22. In addition, in the experiments using the capsules 26 (Examples 1-3, 1-4, and 1-5) produced by applying the fine powder 36 in an amount equal to or more than 1000 ppm to the capsule shells 32 during the production, the capsules 26 were always crushed in the through hole 44 of the filter plug 22. In this way, it is understandable that an appropriate amount of the fine powder 36 is required for the capsule shells 32 during the production, but it is not necessary to apply the fine powder 36 in an amount equal to or more than 1000 ppm to produce the capsules 26. In other words, it is sufficient that the proportion of the fine powder 36 to be applied to the capsule shells 32 during the production is lower than 1000 ppm.

Next, sensory test information (an evaluation of a biting sensation) by the user of the flavor inhalation article 10 will be described with reference to FIG. 13.

The flavor inhalation articles 10 including the filter 14 embedded with the capsules 26 at three different levels (Comparative Example, Example 1-1, and Example 1-2) were prepared, and 30 persons as test subjects were asked to bite and crush the capsules 26 of each level in order. The 30 persons were asked to write down the sensation of the crushability of the capsule 26 in the filter 14 at each level. The capsule 26 has a diameter of 3.5 mm, and the filter plug 22 is a typical monoacetate filter having dimensions of 15 mm (length) × 7.6 mm (diameter). The capsules 26 are embedded in the acetate tow fiber bundle of the filter plug 22.

Each person was asked to select one of the following (1) and (2):
(1) the capsules 26 could be firmly bitten and easily crushed; and
(2) when the capsules 26 were bitten, their positions were slightly shifted relative to the filter plug 22, and it was difficult to crush the capsules 26.

As shown in FIG. 13, in the case of the filter 14 using the capsules of Comparative Example, the 30 persons selected (2) mentioned above. In the case of the filter 14 using Example 1-1, the numbers of the 30 persons who selected (1) and (2) were half-and-half. In the case of the filter 14 using Example 1-2, the 30 persons selected (1) mentioned above. Thus, with regard to the capsules 26 of Example 1-1 and Example 1-2 in which the fine powder 36 was deposited on the capsule shells 32, it can be said that the slipping of the capsules with respect to the tow of the filter plug 22 was clearly suppressed and the capsules 26 were easily crushed as compared with Comparative Example in which the fine powder 36 was not deposited on the capsule shells 32.

It is to be noted that the passage rate by the push-in method shown in FIG. 11A to FIG. 12 is 80% in Comparative Example, whereas the passage rate is 40% in Example 1-1 and 0% in Example 1-2. Thus, it is ensured that the capsules 26 having an appropriate amount of the fine powder 36 is easily crushed in the filter plug 22. Also, in the sensory test information, in the case of using the capsules 26 of Example 1-2 in the filter 14, 100% of the users determined that it was easy to crush the capsules. That is, by using the capsules 26 in which the fine powder 36 of the amount of Example 1-2 is deposited on the outer surfaces of the capsule shells 32 during the production, it is ensured that the capsules 26 are easily crushed.

Here, when calcium carbonate as the fine powder 36 is deposited in the recesses 32b of the capsule shells 32, the amount of irregularities (roughness) of the capsule shells 32 on which the fine powder 36 is deposited is smaller than the amount of irregularities of the capsule shells 32 on which the fine powder 36 is not deposited. As such, it is generally assumed that the capsules 26 will tend to slip relative to the fibers of the filter plug 22. However, when calcium carbonate is used as the fine powder 36, it is possible to make it difficult for the capsules 26 to slip relative to the fibers of the filter plug 22 although the amount of irregularities is reduced in comparison with a case in which the fine powder 36 is not deposited on the capsules. Specifically, by using appropriate fine powder 36, in addition to the static frictional force between the filter plug 22 and the outer surfaces of the capsule shells 32 when the filter plug 22 and the capsules 26 are deformed by the external force F, a static frictional force between the fibers of the filter plug 22 and the fine powder 36 is applied. Therefore, the frictional force between the fibers of the filter plug 22 and the capsules 26 can be increased as compared with the case where the fine powder 36 is not used, i.e., the case where only the static frictional force between the filter plug 22 and the outer surfaces of the capsule shells 32 is applied. Thus, by depositing the fine powder 36 in some of the recesses 32b of the capsule shell 32, it is possible to make it difficult for the capsules 26 to slip relative to the filter plug 22 when the capsules 26 in the filter 14 are crushed by the external force F.

In this way, in the capsules 26 in which an appropriate amount of the fine powders 36 are deposited in some of the recesses 32b of the capsule shells 32, the amount of irregularities with respect to the filter plug 22 are reduced. On the other hand, in a state where the filter plug 22 and the capsules 26 are deformed by the external force F applied from the outside of the filter 14 toward the central axis C, the static frictional force between the filter plug 22 and the capsules 26 can be increased by an amount corresponding to the increase in the static frictional force between the filter plug 22 and the fine powder 36.

When the experiment of the push-in method is performed, the central axis C of the filter 14, that is, the through hole 44, may be disposed in a state of extending in, for example, the horizontal direction, instead of being disposed in a state of extending in the vertical direction, as long as the filter 14 itself can be held in an immovable state.

Further, as described above, in the process of depositing the fine powder 36 on the capsule shells 32, the fine powder 36 not deposited on the capsule shells 32 and the excess fine powder 36 of all the fine powder 36 deposited on the capsules 26 are removed from the capsules 26 by the sieve through which the fine powder 36 passes in the subsequent screening inspection process. When the amount of the fine powder 36 applied to the capsule shells 32 is equal to or less than 1000 ppm during the production, the amount of the fine powder 36 is essentially small. Therefore, it is possible to reduce the amount of the fine powder 36 that falls off in the production line of the filter 14 in which the filter plug 22 is produced while the capsules 26 are embedded. In the production process of the capsules 26, as the amount of the fine powder 36 applied to the capsule shells 32 decreases, the amount of the fine powder 36 that is not deposited on the capsule shells 32 or that fall off from the capsule shells 32 decreases. The amount of the fine powder 36 that is deposited on the projections 32a, is dispersed from the projections 32a, or easily falls off is basically very small. Therefore, the smaller the amount of the fine powder 36, the easier the cleaning of the production line of the capsules 26 and the filter 14. For this reason, in the process of depositing the fine powder 36 on the capsule shells 32 and the process of embedding the capsules 26 on which the fine powder 36 is deposited into the filter plug 22 during the production, it is possible to suppress process troubles such as contamination and clogging in the region where these processes are performed. Thus, the smaller the amount of the fine powder 36, the easier the maintenance such as cleaning of a production line of the flavor inhalation article 10.

In the capsules 26 according to the present embodiment, the amount of the fine powder 36 deposited on the capsule shells 32 is small. Therefore, the appearance of the capsules 26 varies little due to the presence or absence of the fine powder 36.

What is important in the present embodiment is that the fine powder 36 is deposited even in a very small amount in the recesses 32b of the capsule 26. Since the fine powder 36 is deposited so as to enter the recesses 32b of the capsule shell 32, it is difficult for the fine powder 36 to be in direct contact with the fibers of the filter plug 22 before the external force F is applied from the outside of the filter 14 toward the central axis C, and the fine powder 36 is relatively stably present on the capsule 26. The fine powder 36 does not easily fall off from the capsule shell 32 even during the process of producing the filter 14.

In the capsule 26 in which a very small amount of the fine powder 36 is deposited in the recesses 32b of the capsule shell 32, the frictional force that the fine powder 36 contributes to between the capsule 26 and the tow of the filter plug 22 is exerted mainly when the external force F is applied to the filter plug 22 toward the central axis C of the filter 14. That is, before the external force F is applied to the filter plug 22 toward the central axes C of the filter plug 22 (when no force is applied), the tow fibers of the filter plug 22 to which the frictional force is applied to the capsule 26 are not brought into contact or hardly brought into contact with the fine powder 36 deposited in the recesses 32b of the capsule shell 32. On the other hand, when the external force F is exerted and applied to the filter plug 22 toward the central axis C of the filter plug 22, the tow fibers of the filter plug 22 are deformed, and it is ensured that the tow fibers are brought into contact with the fine powder 36 that is present in the recesses 32b of the outer surface of the capsule 26.

The fine powder 36 may increase the static frictional force between the capsule shell 32 and the fibers of the tow of the filter plug 22 as compared with a case where no fine powder 36 is present between the capsule shell 32 and the fibers of the tow of the filter plug 22. Thus, the fine powder 36 can generate static friction with the fibers of the tow of the filter plug 22. The fine powder 36 can also create a static frictional force when sandwiched between the outer surface of the capsule shell 32 and the fibers of the tow of the filter plug 22.

Although each visual particle size is small, a large number of particles of fine powder 36 existing in a wide range of the recesses 32b of the outer surface of the capsule shell 32 grip the tow of the filter plug 22 in the recesses 32b in which the fine powder 36 is deposited. Therefore, a static frictional force is generated between the tow of the filter plug 22 and the fine powder 36 of the capsule 26, and the positional deviation of the capsule 26 with respect to the filter plug 22 is effectively prevented. For this reason, when the user applies an external force F by pressing with fingers or biting toward the central axis C of the filter 14, the capsule 26 does not easily slip relative to the filter plug 22, and the capsule 26 is easily crushed.

Thus, even if a high frictional force does not normally occur between the filter plug 22 and the outer surface of the capsule shell 32 due to the presence of the fine powder 36 in the recesses 32b of the capsule shell 32, the fine powder 36 generates a very effective frictional force between the filter plug 22 and the outer surface of the capsule shell 32 when the external force F is applied to the capsule shell 32 through the filter plug 22.

On the other hand, the fine powder 36 is removed from the projections 32a on the outer surface of the capsule shell 32. When feeding the capsules 26 during production of the filter 14, in a case where the capsules 26 are in contact with each other in a hopper or the like, if the fine powder 36 is not removed from the projections 32a, the fine powder 36 may be separated from the capsules 26 due to, for example, friction between the capsules 26, and the production equipment may be contaminated, or a phenomenon of the capsules 26 being not easily separated from each other (friction) may occur (feeding error). However, by appropriately removing the fine powder 36 from the projections 32a of the outer surfaces of the capsule shells 32, even if the capsules 26 are in contact with each other, friction between the capsules 26 is less likely to occur, and thus the problem described above is less likely to occur.

The fact that calcium carbonate as the fine powder 36 was deposited on the capsule shells 32 was verified using an energy dispersive X-ray spectroscope (EDS) of an electron microscope. By detecting a specific X-ray excited by an electron beam by the EDS, it is possible to specify a content and a composition ratio of an element having an atomic number greater than that of carbon C in the capsule 26. FIG. 14 shows an electron microscope photograph of the outer surface of the capsule shell 32 from which a calcium Ca element was extracted. As shown in FIG. 14, it is recognized that the calcium Ca element is localized in the recesses 32b of the capsule shell 32. The EDS can identify the presence of the fine powder 36 in the recesses 32b of the capsule shell 32, except for a case where a large amount of calcium Ca element is contained as a material of the capsule shell 32.

In the capsule 26, 90% or more is occupied by organic substances (carbon C and oxygen O). The value obtained by converting the wt% of the calcium Ca element into the wt% of calcium carbonate (CaCO₃) can be regarded as the wt% with respect to the capsule shell (coat) 32.

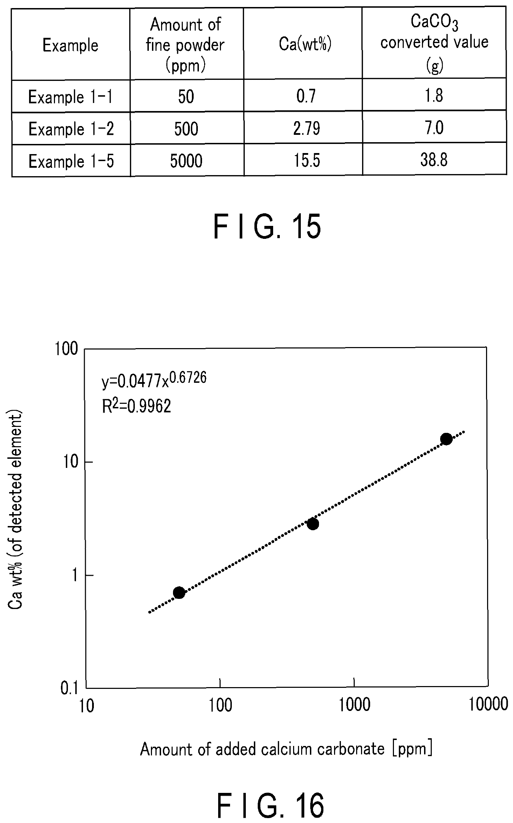

FIG. 15 shows the results of photographing the capsules 26 of Example 1-1, Example 1-2, Example 1-3, and Example 1-5, in which calcium carbonate was used as the fine powder 36, at a predetermined magnification (for example, 6000 times) using an electron microscope and measuring the wt% of calcium Ca with respect to the capsules 26. As shown in FIG. 16, the detected wt% of the calcium Ca element with respect to an amount (ppm) of the fine powder 36 added to the capsule shells 32 can be linearly approximated with the vertical axis and the horizontal axis as logarithms. Therefore, when the amount of the fine powder 36 added to the capsule shells 32 increases, the amount of the detected calcium Ca element increases.

Also in the case of Comparative Example in which calcium carbonate is not added as the fine powder 36 to the capsule shells 32, the calcium Ca element may be detected by the EDS.

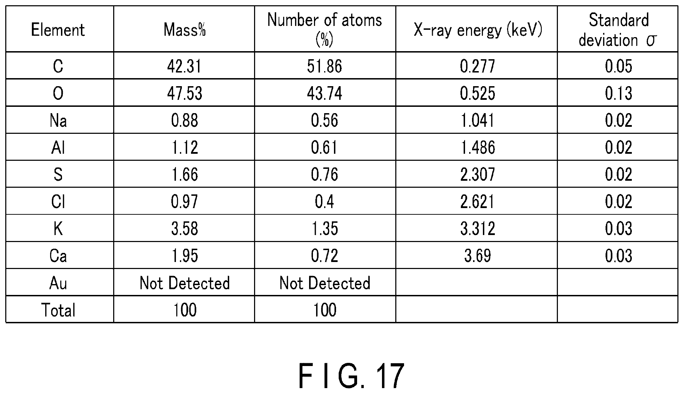

FIG. 17 shows a mass% of an element and a proportion (%) of the number of atoms with respect to the entirety of each capsule 26, X-ray energy (keV), and a standard deviation σ at a certain position on the outer surfaces of the capsules 26 on which the fine powder 36 is not deposited. As shown in FIGS. 14 to 17, it is possible to detect the amount of calcium carbonate as the fine powder 36 with respect to the capsules 26 by detecting the mass of the calcium Ca element per unit area (the mass of the calcium Ca element shown in one field of view) with the energy dispersive X-ray spectroscope. That is, in Example 1-1 to Example 1-5, the amount of the fine powder 36 applied to the capsule shells 32 during the production and the amount of the fine powder 36 deposited on the capsule shells 32 of the capsules 26 embedded in the filter plug 22 can be examined using an electron microscope.

The tows constituting the filter plug 22 may be combined with other additional fibers. The other additional fibers may include, for example, carbon fibers, activated carbon fibers, natural fibers, synthetic fibers, or any combination thereof.

The tow can optionally include an adhesive additive therein. The adhesive additive may be, for example, a binder, an adhesive, a resin, a tackifier, or the like, or any combination thereof. The adhesive additive allows the fibers of the tow to bond together.

The tow may contain optional additives. Optional additives include, for example, active particles, an active compound, an ionic resin, a zeolite, nanoparticles, ceramic particles, a softener, a plasticizer, a pigment, a dye, a flavor, a fragrance, a controlled release vesicle, a surface modifier, a lubricant, an emulsifier, a vitamin, a peroxide, a biocide, an antifungal agent, an antibacterial agent, an antistatic agent, a flame retardant, an antifoaming agent, a decomposing agent, a conductivity modifier, a stabilizer, a finishing agent, and the like, or any combination thereof.

The tow may be surface treated to impart surface functionality. For example, methods such as dipping, spraying, exposure to plasma, exposure to ionized gas, and the like can be used to functionalize, ionize, oxidize, hydrolyze, and the like the surface of the tow.

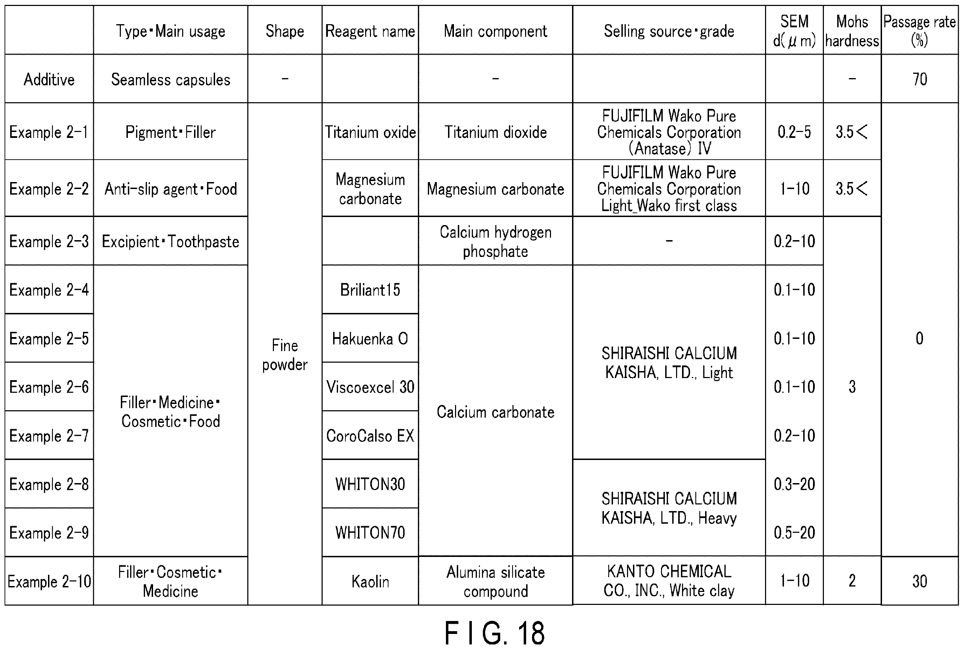

Note that the fine powder 36 is not limited to calcium carbonate as long as the material of the filter plug 22 of the filter 14 has a greater coefficient of static friction in the case being in contact with the capsule shells 32 via the fine powder 36 rather than that in the case where the material of the filter plug 22 of the filter 14 is in direct contact with the capsule shell 32. For example, Additive Examples 1 to 10 shown in FIG. 18 may be used, together with calcium carbonate, as the fine powder 36 having such a visual particle size (for example, about 10 µm or less) that can enter the recesses 32b of the capsule shell 32.

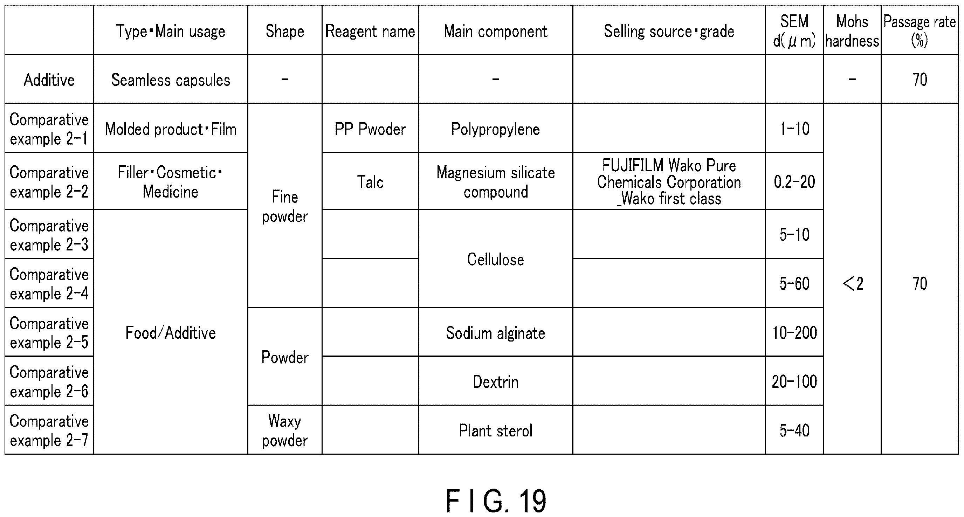

FIG. 18 shows preferred examples 2-1 to 2-10 of the capsules 26. The capsules 26 of Examples 2-1 to 2-10 were obtained by applying a preferable fine powder (additive) 36 of, for example, 1000 ppm, to the capsule shells 32 during the production of the capsules 26. The main components of the fine powder 36 of the capsules of Examples 2-1 to 2-10 in FIG. 18 are titanium dioxide, magnesium carbonate, calcium hydrogen phosphate, calcium carbonate, and an alumina silicate compound. FIG. 19 shows capsules of Comparative Examples 2-1 to 2-7 of the additive for comparison with FIG. 18. The main components of the capsule powder of Comparative Examples 2-1 to 2-7 in FIG. 19 are polypropylene, a magnesium silicate compound, cellulose, sodium alginate, dextrin, and plant sterol.

As in the case of the capsules 26 of Example 1-3 (see FIG. 3) in which 1000 ppm (relative to the weight of the capsules) of calcium carbonate fine powder 36 was applied to the outer surfaces of the capsule shells 32, the capsules 26 were produced while the fine powder 36 of Examples 2-1 to Examples 2-10 shown in FIG. 18 was being applied to the outer surfaces of the capsule shells 32 in the amount of 1000 ppm as an additive, and the capsules 26 thus produced were subjected to an experiment using the push-in method shown in FIGS. 11A and 11B.

In addition, the capsules were produced while the powder of Comparative Example 2-1 to Comparative Example 2-7 shown in FIG. 19 was being applied to the outer surfaces of the capsule shells 32 in the amount of 1000 ppm as an additive, and the capsules thus produced were subjected to an experiment using the push-in method shown in FIGS. 11A and 11B.

In a case where the additive deposited on the capsule shells 32 was the fine powder 36 of Example 2-1 to Example 2-10 shown in FIG. 18, the passage rate of the capsules 26 through the through hole 44 of the filter 14 by the push-in method was 0%. In other words, in the case of using the capsules 26 having the fine powder 36 of Examples 2-1 to 2-10, none of the capsule shells 32 of the capsules 26 passed through the filter 14. In the case of the powder of Comparative Examples 2-1 to 2-7 shown in FIG. 19, the passage rate of the capsules 26 through the through holes 44 of the filter 14 by the push-in method was 70%, which was substantially the same as that in the case where no powder was present.

### (Particle Size of Fine Powder 36)

Referring to FIGS. 18 and 19, in the capsules 26 produced while the fine powder 36 is being applied to the capsule shells 32, the result concerning the passage rate by the push-in method, namely, the effect of preventing the positional deviation of the capsules 26 with respect to the filter plug 22 of the filter 14, varies depending on the type of the powder.

FIG. 18 shows a rough range of the diameter (particle size) d (µm unit) (short/long length of the fine powder 36) when the fine powder 36 used for the capsules 26 of Example 2-1 to Example 2-10 was observed using an electron microscope (SEM). The agglomerated particles (secondary particles) of the fine powder 36 were observed at a magnification of 400 times, and the fine powder 36 of the secondary particles composed of the primary particles were observed at a magnification of 6000 times.

In addition, FIG. 19 shows a rough range of the diameter (particle size) d (µm unit) when the powder used for the capsules of Comparative Examples 2-1 to 2-7 was observed through the SEM.

As shown in FIGS. 18 and 19, when the particle sizes of the fine powder were visually confirmed through the SEM, the visual particle sizes of Examples 2-1 to 2-10 were smaller than the visual particle sizes of Comparative Examples 2-1 to 2-7. As the visual particle sizes d of the fine powder 36 is smaller, the passage rate by the push-in method tends to be lower than that when the visual particle size d is relatively large. The fine powder 36 having a large visual particle size tends not to effectively act on the recesses 32b, whereas the fine powder 36 having a small visual particle size tends to effectively act on the recesses.

### (Mohs Hardness)

As shown in FIGS. 18 and 19, the inventor of the present application used Mohs hardness to express the hardness of the additive. The Mohs hardness is known as a parameter of hardness which is widely and generally used. As the Mohs hardness, talc having a low hardness is set to 1, and substances having a hardness higher than that of talc are numbered in ascending order up to a hardness 10 of diamond. The inventor used a Mohs hardness meter produced by Tokyo Science Co., Ltd. to measure the Mohs hardness of the powder used.

When the additive is in a powder state, it is difficult to measure the Mohs hardness. Therefore, first, the hardness of a metal plate (lead, zinc, aluminum, copper, or nickel) on hand was measured with a Mohs hardness meter. Then, the surface of the metal plate was lightly rubbed with powder fixed to an adhesive tape, and the hardness was determined based on the presence or absence of scratches on the surface. When it was difficult to judge the hardness, known hardness information was referred to.

Each of the fine powders 36 on the capsules 26 of Examples 2-1 to 2-10 was a powder having an effect of suppressing the positional deviation of the capsules 26 with respect to the filter tow, and the measured value of the Mohs hardness thereof was 2 or more. The powders on the capsules 26 of Comparative Examples 2-1 to 2-7, in which the effect of suppressing the positional deviation of the capsules 26 with respect to the filter tow was not observed, all had a Mohs hardness of less than 2. Therefore, in a case where the Mohs hardness was 2 or more, the passage rate by the push-in method was low, and the capsules 26 were easily crushed in the filter 14. Thus, the Mohs hardness of the fine powder 36 is preferably 2 or more. The Mohs hardness of the fine powder 36 is more preferably 3 or more.

It is understood that the fine powder (powder particles) 36 added to the surfaces of the capsule shells 32 needs to have a certain degree of hardness in order to exert the effect of suppressing the slipping of the capsules 26 with respect to the filter plug 22 of the filter 14. It is considered that the fine powder 36 accumulated and present in the recesses 32b of the capsule shells 32 mainly bites into the filter tow of the filter plug 22 when an external force is applied to the filter 14, and grip the filter tow, thereby producing the effect. Therefore, the mass of the primary particles or the secondary particles of the powder needs to be harder than the filter plug 22. The fine powder 36 that is softer than the filter plug 22 will be broken by the force between the filter tow and the capsule shells 32, lose gripping force, and slip. Therefore, it is understood that the fine powder 36 is required to be harder and less fragile as compared with the filter tow of the filter plug 22 in a state where the fine powder has entered the recesses 32b of the capsule shells 32.

An easy-to-understand example is talc which forms the capsules of Comparative Example 2-2 containing a magnesium silicate compound as a main component. Talc has a small visual particle size as fine powder to be deposited on the capsule shells 32 and is preferable in this respect, but its hardness is insufficient. Because of its fragile and soft nature, talc is easily broken under force, which is why it is generally used as a slip agent, not as an anti-slip agent.

On the other hand, magnesium carbonate, which forms the fine powder 36 on the capsules 26 of Example 2-2, has a small visual particle size substantially similar to that of talc, but has a Mohs hardness of 2 or more. The capsules 26 of Example 2-2 were found to be sufficiently effective in suppressing the positional deviation of the capsules 26. Magnesium carbonate, which is the main component of the fine powder 36 of the capsules 26 of Example 2-2, is an anti-slip agent used in, for example, gymnastics, and is fixed in the recesses of the skin with the moisture of the skin as a trigger to generate friction.

In the usage of this embodiment, magnesium carbonate is used due to its inherent hardness rather than moisture. The Mohs hardness required for the fine powder 36 in the present embodiment is 2 or more, but in the capsules 26 of Example 2-10 in which the main component is an alumina silicate compound, the effect of suppressing the positional deviation is somewhat poor. Therefore, the Mohs hardness of the fine powder 36 to be deposited on the capsule shells 32 is preferably 3 or more if possible.

The visual particle sizes d of the fine powder 36 are preferably from 0.1 µm to 10 µm. The visual particle sizes d of the fine powder 36 are more preferably from 0.1 µm to 5 µm.

In order to exhibit the function of suppressing the slipping of the capsules 26 with respect to the filter plug 22 of the filter 14, it is necessary that a large number particles of fine powder (powder particles) 36 be present in the recesses 32b resulting from the irregularities of the surfaces of the capsule shells 32.

Particles that are simply deposited on the outer surfaces of the capsule shells 32 may be present. Since the particles easily fall off due to friction between the capsule shells 32 or the like and cause various defects derived from the powder, it is preferable that the number of the particles be small.

The sizes of the recesses 32b of the capsule shells 32 used in the present embodiment are, as described above, 5 µm in depth on average and about 10 µm or less in width. Therefore, the sizes d of the particles that can be present in the recesses 32b of the capsule shells 32 are required to be in the range of 10 µm or less, preferably in the range of 5 µm or less. Since the sizes of the recesses 32b of the capsule shells 32 are represented as a mean size, even if the range of the particle sizes d is slightly wider than the aforementioned range, there is no practical problem as long as a large number of particles falling within the aforementioned range are included.

In relation to the observation magnification of an observation apparatus, the lower limit of the detected particle size d is 0.1 µm (100 nm). Therefore, depending on the type of the fine powder 36, the fine powder 36 having a particle size equal to or smaller than the aforementioned range may be present.

In the capsules 26 containing the additives of Examples 2-1 to 2-7 and 2-10 in which the passage rate of the capsules 26 through the through holes 44 of the filter 14 using the push-in method is low and the effect of suppressing the positional deviation of the capsules 26 with respect to the filter plug 22 is observed, the visual particle size of all the particles is 10 µm or less, which is sufficiently small to fill the recesses 32b of the capsule shells 32.

The fine powder 36 of the capsules 26 of Examples 2-8 and 2-9 is heavy calcium carbonate obtained by crushing natural ore. The fine powder 36 has visual particle sizes in a range of about 20 µm or less, but the center of the particle size distribution is at a smaller size.

Particles having large visual particle sizes d of the fine powder (additive) 36 are present in the recesses 32b of the capsule shells 32. Such particles of the fine powder (additive) 36 having large visual particle sizes d are secondary particles in which primary particles are agglomerated. These secondary particles can be easily separated into primary particles by vibration or friction and can be buried in the recesses 32b of the capsule shells 32, during the process of producing the capsules 26.

In the capsules of Comparative Examples 2-5 and 2-6 in which the positional deviation suppression effect is not observed, the visual particle sizes of the powder (additive) are 10 times or more as large as the visual particle sizes d of the fine powder 36 of the capsules 26 of Examples 2-1 to 2-10. That is, the visual particle sizes of the powder of the capsules of Comparative Examples 2-5 and 2-6 are in a range larger by one digit than the visual particle sizes d of the fine powder 36 of the capsules 26 of Examples 2-1 to 2-10, and the number of particles of 10 µm or less is not sufficient.

In addition, the particles having large visual particle sizes as used in the capsules of Comparative Examples 2-5 and 2-6 are merely deposited on the surfaces of the capsule shells 32 and do not fill the recesses 32b of the capsule shells 32. For this reason, particles having large visual particle sizes can easily fall off from the capsule shells 32 due to vibrations during the process of producing the capsules 26, during transportation, or the like. Therefore, the particles (additive) having large visual particle sizes do not exhibit the effect of suppressing the positional deviation of the capsules 26 with respect to the filter plug 22 and easily fall off from the capsule shells 32.

On the other hand, as in Comparative Examples 2-1 and 2-2 in which the effect of preventing the positional deviation of the capsules 26 with respect to the filter plug 22 is not obtained, some additives have sufficiently small visual particle sizes. This is because the hardness such as the Mohs hardness described above is insufficient.

The chemical analysis of a substance in which the visual particle sizes d of the fine powder 36 are in the range of 0.1 µm to 10 µm (preferably in the range of 0.1 µm to 5 µm) and the Mohs hardness is 2 or more (preferably 3 or more) is various and complicated. Therefore, the present inventor determined the quantity by a predetermined method capable of dealing with almost all substances by a relatively simple method. As a result, the amount of the powder present on the surfaces of the capsule shells 32, which is effective for the positional deviation suppression effect, was obtained with three kinds of parameters.

### (P1) Ratio by weight of powder added to capsules

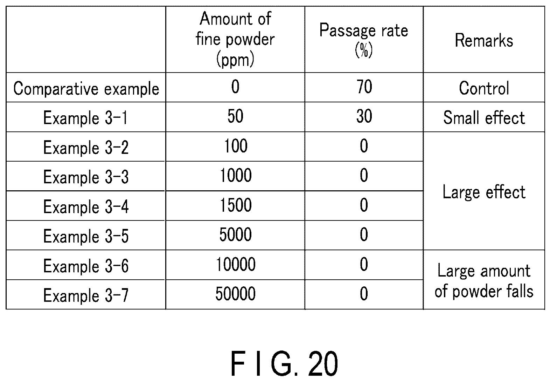

First, the inventor prepared a ratio of the weight of the added fine powder 36 to the weight of the capsules as shown in FIG. 20 to indicate the relationship with the effect. In Example 3-1 to Example 3-7, the amounts of the fine powder 36 applied during the production were respectively set to 50 ppm, 100 ppm, 1000 ppm, 1500 ppm, 5000 ppm, 10000 ppm, and 50000 ppm, and the passage rate was obtained by using the push-in method (see FIG. 11A and FIG. 11B).

When the experiment using the push-in method was performed, the capsules 26 did not pass through the filter 14 and an obvious effect was obtained in a case where the range of the amount is 100 ppm or more in Example 3-2. However, in Examples 3-6 and 3-7 in which the amount of the fine powder 36 applied during the production is equal to or more than the 10000 ppm, an excessive amount of the powder is present. Therefore, even when the capsules are applied to a sieving machine, the powder continues to fall off, which makes it difficult to use the capsules 26.

The amount of the fine powder 36 is just the amount added during the production, and an excess amount of the fine powder is shaken off. Thus, the amount is different from that actually present on the surfaces of the capsule shells 32. Furthermore, different capsule weights will result in different ratios of fine powder 36 to the total weight of the capsules 26.

The inventor detected elements on the surfaces of the capsule shells 32 by using a scanning electron microscope (SEM) and an energy dispersive X-ray spectroscope (EDS) so as to approach a clearer quantitative expression. As a result, a surface coverage (P2) and an element proportion (P3) in the capsule shells (coating) 32 are determined as new parameters effective for preventing the positional deviation.

Samples of the capsules 26 were tested using an SEM with an EDS (JCM-6000Plus NeoScope (registered trademark) produced by JEOL Ltd.), and it was confirmed that the particles were concentrated in the recesses 32b of the capsule shells 32. Thereafter, an EDS was used to obtain an image for analysis in which the calcium (Ca) element was mapped under the following settings, and individual weight information of all elements having atomic numbers equal to or greater than that of carbon (C) that are present in the capsule shells (coating) 32 and on the capsule shells (coating) 32:
Acceleration voltage: 15 KeV
Irradiation current: 7.5 nA
Measurement magnification: ×200
Number of pixels: 256×192
Duel time: 0.2 m seconds
Number of sweeps: 20

In the mapping image obtained by the SEM with the EDS, noise of 10 µm or less was eliminated by image analysis software. Here, a luminance portion of 10 µm or more was set as a target, and a sum of areas of the luminance portions was calculated and divided by the entire visual field area, so that the proportion (surface coverage) of the area where the signal calcium is detected to the area of the surfaces of the capsule shells 32 was expressed as a percentage.

The SEM with the EDS can perform mapping and simple quantitative determination of a detected element at the same time. Here, the sum of the weights of all the detected elements having atomic numbers equal to or greater than that of carbon (C) constituting the capsule shells (coating) 32 is assumed to be a total constituent weight of the capsule shells (coating) 32, and the proportion of the weight of the calcium (Ca) element to the total constituent weight is represented in weight percentage as the element proportion in the capsule shells (coating) 32.

In a seamless capsule using a gel base, the detection range can be from the surfaces of the capsule shells 32 to a depth of about 20 µm under a voltage of 15 KeV. Therefore, the element proportion in the capsule shells 32 sufficiently reflects the information on elements not only on the surfaces of the capsule shells 32 but also in the coating that forms the capsule shells 32.

The information on elements contained in the capsules 26 after the addition of the fine powder 36 measured by the SEM with the EDS includes the information on elements contained in the capsules 26 before the addition of the fine powder 36. Therefore, the surfaces of the capsule shells 32 before the addition of the fine powder 36 were also measured in advance by the same method, and the detected amount was subtracted as a background from the coverage and the weight proportion.

It has been confirmed that even in the case of the capsules 26 after the addition of the fine powder 36, when the capsules 26 are immersed in a solvent such as alcohol in which the capsule shells 32 do not dissolve and the fine powder 36 is removed by an ultrasonic cleaning machine or the like, the state of the capsules 26 before the addition of the fine powder 36 can be substantially reproduced and the measurement can be performed.

The fine powder (powder particles) 36 exists as non-uniform island-like agglomerated particles in the capsule shells 32. If the fine powder (powder particles) 36 is uniformly distributed in the capsule shells 32, a pattern without unevenness as a whole is obtained. The island-like agglomerated particles (fine powder 36) correspond to portions of the recesses 32b on the surfaces of the capsule shells 32.

### (P2) Surface coverage

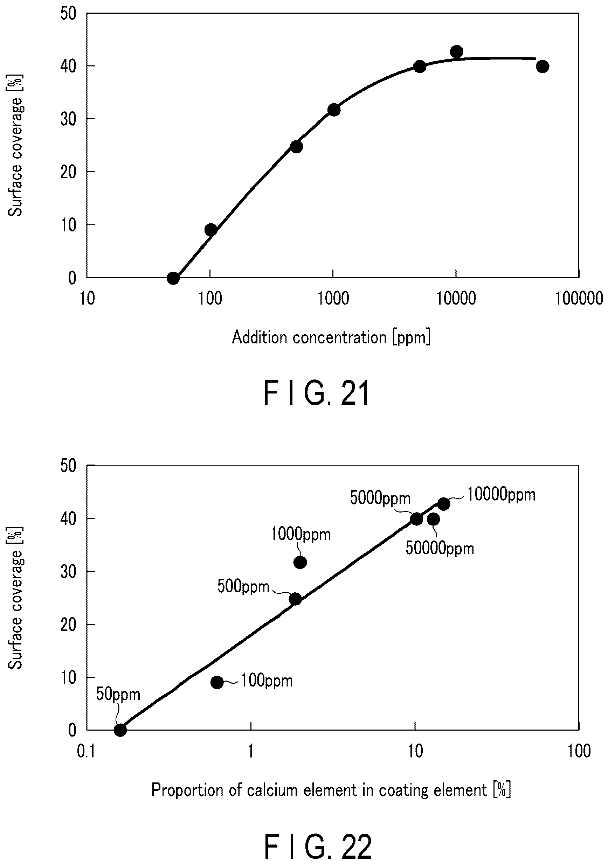

FIG. 21 shows results of measurement of the surface coverage of the fine powder 36 (the proportion of an area where a signal of a target element is detected to a projected area on the surfaces of the capsule shells 32) for each of the amounts of added calcium carbonate used as the fine powder 36 (Examples 3-1 to 3-7 shown in FIG. 20). As a result, in the capsules 26 produced by applying the fine powder 36 in an amount equal to or more than 100 ppm to the capsule shells 32 during the production, the surface coverage of the fine powder 36 is in the range of 10% to 45%, preferably 20% to 40%.

In a case where the amount of calcium carbonate (fine powder 36) added during the production of the capsules 26 is large, the deposition on the capsule shells 32 is saturated and the powder does not enter the recesses 32b of the capsule shells 32, so that the amount of excess powder which is not deposited increases. It can be seen that the upper limit of the effective amount of calcium carbonate as the fine powder 36 added during the production of the capsules 26 is generally 5000 ppm.

### (P3) Element proportion in the capsule shells (coating)

FIG. 22 shows results of measurement of the weight percentage of the calcium (Ca) element in the elements (detected elements) contained in the capsule shells (coating) 32 for each of the amounts of added calcium carbonate used as the fine powder 36 (Examples 3-1 to 3-7 shown in FIG. 20).

As a result, in the capsules 26 produced by applying the fine powder 36 in an amount equal to or more than 100 ppm to the capsule shells 32 during the production, the weight proportion of the target element (calcium (Ca)) to the elements of the capsules 26 is in the range of 0.5% to 20%, preferably in the range of 1% to 10%. The target element in the elements of the capsules 26 includes the fine powder 36.

In a case where the amount of calcium carbonate (fine powder 36) added during the production of the capsules 26 is large, the deposition on the capsule shells 32 is saturated and the powder does not enter the recesses 32b of the capsule shells 32, so that the amount of excess powder which is not deposited increases. It can be seen that the upper limit of the effective amount of calcium carbonate as the fine powder 36 added during the production of the capsules 26 is generally 5000 ppm.

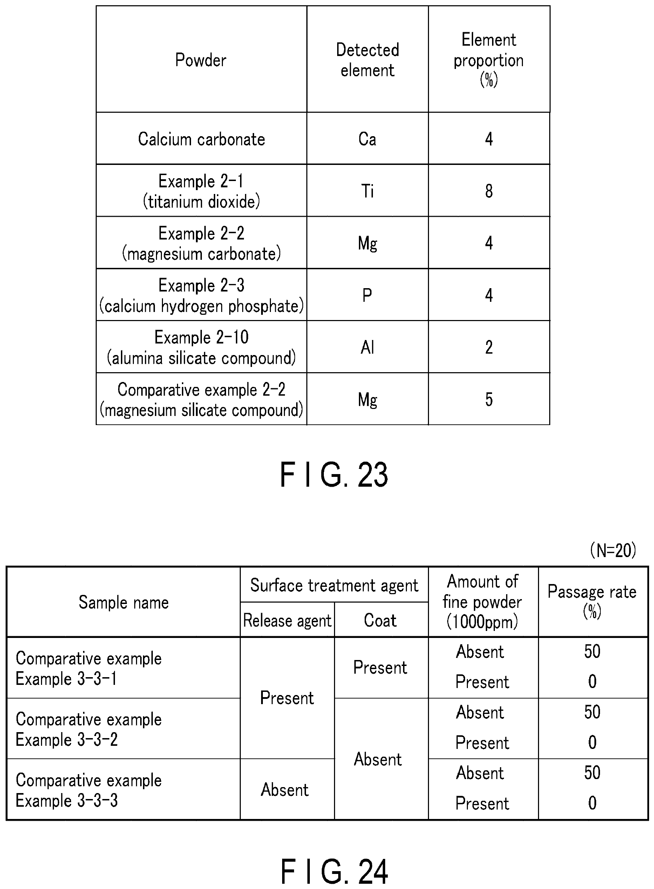

The example described above is an example of detection quantitative determination targeted for calcium carbonate as the fine powder 36. FIG. 23 shows examples of element proportions (wt%) in a case where the main component of the fine powder 36 is changed as in Example 2-1, Example 2-2, Example 2-3, and Example 2-10 of the additive shown in FIG. 18 and as in Comparative Example 2-2 of the additive (see FIG. 19).

The easiness of deposition of the fine powder 36 to the capsule shells 32, the element, and the weight of the compound vary depending on the type of the fine powder 36. Therefore, the element proportions of the main components of the fine powder 36 in the capsules 26 shown in FIG. 23 indicate the values of the respective elements. As shown in FIG. 23, the element proportion of the main component of the fine powder 36 in the capsules 26 does not vary greatly enough to exceed a factor of two as compared with the example of calcium (Ca) as the main component of calcium carbonate. Therefore, it can be said that the above-described preferable range of the main component of the element proportion is generally universal, regardless of the element or compound of the main component of the fine powder 36 to be used.

The surface coverage (area parameter) and the element proportion (element amount) were measured in the same manner as described above using the SEM with the EDS. In the examples shown in FIGS. 20 to 22, the case where the fine powder 36 of calcium carbonate is added to the capsule shells 32 is exemplified. The surface coverage and the element proportion of the main component can be obtained basically by the same method even if another type of fine powder (powder additive) 36 is used, except that the target element is different.

A surface treatment agent may be applied to the outer surfaces of the capsule shells 32, for example, in order to prevent the capsule shells 32 from being bonded to one another. In a case of applying, for example, a release agent to the outer surfaces of the capsule shells 32 as the surface treatment agent, the capsule shells 32 are prevented from being bonded to one another. In a case of applying a coating agent as the surface treatment agent to the outer surfaces of the capsule shells 32, the waterproof property (water absorption property) of the capsule shells 32 is adjusted. In a case of applying a coating agent as the surface treatment agent to the outer surfaces of the capsule shells 32, the slipperiness is adjusted.

However, as shown in FIG. 24, in the case of applying the surface treatment agent to the outer surfaces of the capsule shells 32, the passage rate was 50% where the fine powder 36 was not deposited, and the passage rate was 0% where for example, 1000 ppm of the fine powder 36 was deposited. Therefore, it can be said that the surface treatment agent applied to the outer surfaces of the capsule shells 32 does not affect the effect of preventing the positional deviation of the capsule 26.

As described above, according to the present embodiment, the following can be said.

For example, it is preferable to add the fine powder 36 of 100 ppm or more to the capsule shells 32 during the production of the capsules 26. On the other hand, when the amount of the fine powder 36 exceeded 10000 ppm as in Example 2-6 and Example 2-7, the amount of the fine powder 36 that was deposited on the capsule shells 32 increased. Therefore, it is preferable to add the fine powder 36 of 100 ppm or more and less than 10000 ppm to the capsule shells 32 during the production of the capsules 26.

The visual particle sizes of the fine powder 36 to be deposited on the capsule shells 32 are preferably 0.1 µm to 10 µm, and more preferably 0.1 µm to 5 µm. The Mohs hardness of the fine powder 36 is preferably 2 or more, and more preferably 3 or more. The surface coverage of the fine powder 36, that is, the proportion of an area where the detection signal of the main component element of the fine powder 36 to the area of the surfaces of the capsule shells 32, is in the range of 10% to 45%, and more preferably in the range of 20% to 40%. A sum of the weight proportion of the element of the main component of the fine powder 36 and the weight proportion of the element of the fine powder in the elements on the surfaces of the capsules 26 is preferably in the range of 0.5% to 20%, and more preferably in the range of 1% to 10%.

Next, a modification of the filter 14 of the flavor inhalation article 10 will be described.

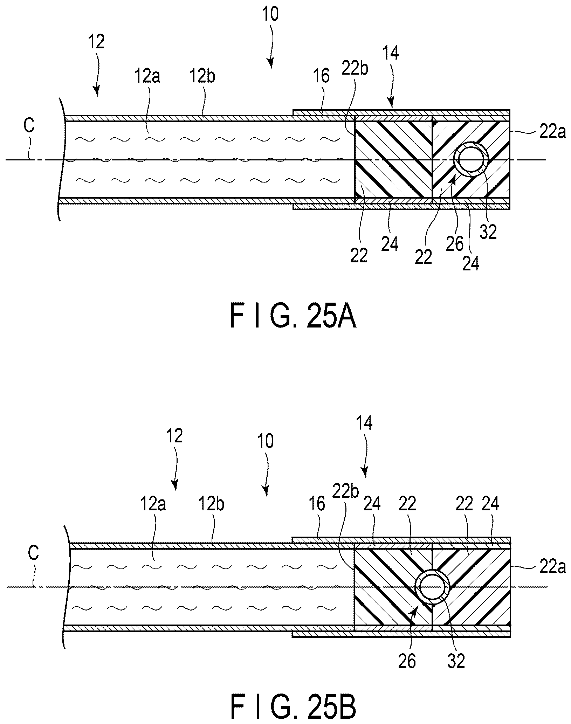

As shown in FIGS. 25A and 25B, the structure of the filter 14 preferably includes two filter plugs (dual filter plugs) 22. The length of each filter plug 22 is 5 mm to 20 mm.

In the example shown in FIG. 25A, a capsule 26 with fine powder 36 deposited on a capsule shell 32 is embedded in the filter plug 22 on a mouthpiece side. Although not shown, the capsule 26 may be embedded in the filter plug 22 on a rod 12 side. That is, each of the filter plugs 22 of one filter 14 may include a capsule 26.

Although not shown, a space may be formed between the filter plugs 22 of the filter 14. In this case, the capsule 26 is embedded in, for example, the filter plug 22 on the mouthpiece side or the filter plug 22 on the rod 12 side.

In the example shown in FIG. 25B, one capsule 26 is interposed in a portion sandwiched between the two filter plugs 22. Thus, the capsule 26 may be embedded in the filter plugs 22 as shown in FIG. 25B.

Although not shown, the filter 14 may be provided with three or more filter plugs 22. In this case, the capsule 26 may be embedded in any of the filter plugs 22. A capsule 26 may be embedded in each of the filter plugs 22. Alternatively, the capsules 26 may be provided in the adjacent filter plugs 22 in a portion sandwiched therebetween. That is, a plurality of capsules 26 may be included in one filter 14.

Specifically, the example of the filter 14 shown in FIG. 2 is an example of a mono filter, in which a capsule 26 is embedded in the filter plug 22. The example of the filter 14 shown in FIG. 25A is an example of a dual filter, in which, for example, a capsule 26 is embedded inside the filter plug 22 on the mouthpiece side. The example of the filter 14 shown in FIG. 25B is an example of a dual filter, in which, for example, a capsule is sandwiched between the filter plug 22 on the mouthpiece side and the filter plug 22 on the rod 12 side. In the present embodiment, the filter plugs 22 of the filter 14 shown in FIG. 25A may be separated from each other. On the other hand, in the filter 14 shown in FIG. 25B, the end faces of the filter plugs 22 are in contact with each other.

In each filter 14, the form of the filter plugs 22 is not particularly limited, and may be a plane filter including a single filter segment (mono filter segment), a multi-segment filter including a multi-filter segment such as a dual filter or a triple filter, or the like.

The entire outer periphery of the outer surfaces of all of the capsules 26 may be embedded in the filter plug 22 between the one end 22a and the other end 22b of the filter plug 22.

One capsule 26 shown in FIGS. 2, 25A, and 25B may be present in each filter plug 22, or a plurality of (for example, two to ten) capsules 26 may be present in each filter plug 22. For example, if ten capsules 26 are embedded in one filter plug 22, it is preferable that all the capsules 26 can be crushed, but there is no problem even if some of the capsules 26 remain uncrushed.

In a case where the filter 14 includes a plurality of filter plugs 22, the filter plug 22 on the rod 12 side and the filter plug 22 on the mouthpiece side may have the same material and structure, or may have different materials and structures.

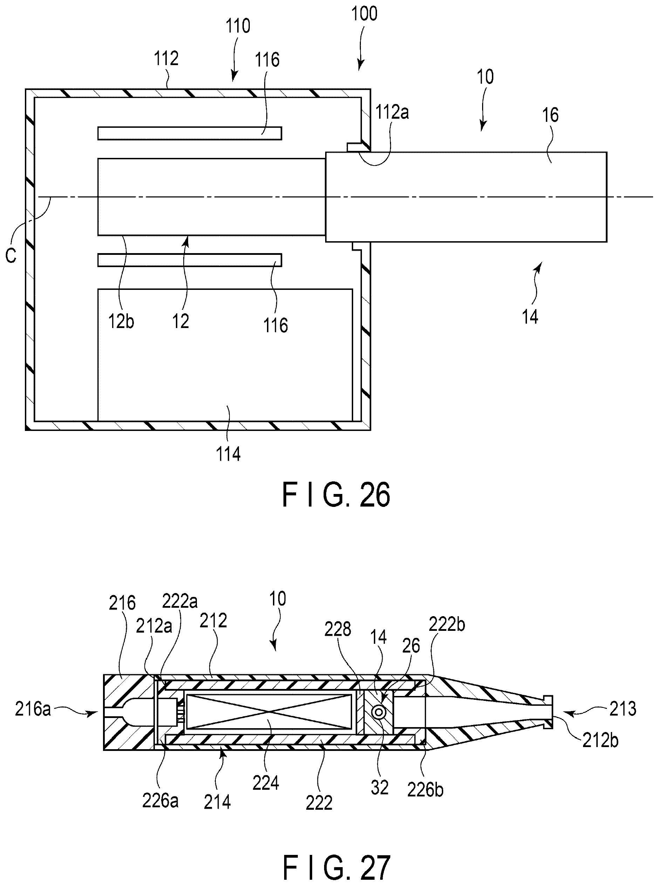

Next, a heating-type flavor inhalation article system 100 will be described with reference to FIG. 26.

The heating-type flavor inhalation article system 100 has a heating device 110 and a non-combustible heating-type flavor inhalation article 10. The schematic structure of the non-combustible heating-type flavor inhalation article 10 is the same as that shown in FIGS. 1, 2, 25A, and 25B, although the lengths of rods 12 may be different.

The heating device 110 includes a main body 112, a battery 114, and a heater 116.

The battery 114 is disposed in the main body 112. The battery 114 can be charged and discharged. The main body 112 has an insertion portion 112a which a rod 12 of the flavor inhalation article 10 can be inserted into and removed from. The heater 116 which is driven by electric power supplied from the battery 114 is provided around the insertion portion 112a of the main body 112.

The heating device 110 heats an aerosol-generating rod 12 by the electrical heater 116 or the like.

When electric power is supplied from the battery 114 to the heater 116 disposed so as to surround the insertion portion 112a, the aerosol-generating rod 12 inserted into the insertion portion 112a is heated. Flavor is released from a filler 12a of the aerosol-generating rod 12 into ambient air. The heating temperature of the aerosol-generating rod 12 by the heater 116 is, for example, 400 °C or lower, which is considerably lower than the combustion temperature of 700 to 800 °C of a combustible-type flavor inhalation article 10 in which the tip of the rod 12 is ignited. By heating at such a low temperature, the amount of mainstream smoke generated from the aerosol-generating rod 12 is reduced as compared with that generated from the combustible-type flavor inhalation article 10 or the like. Therefore, the filtering function of the filter 14 of the non-combustible heating-type flavor inhalation article 10 is preferably lower than that of the filter 14 of the combustible-type flavor inhalation article 10, so that a preferred amount of mainstream smoke is shared in the mouth of the smoker.

In order to reduce the filtration of the mainstream smoke with respect to the filter 14 of the combustible-type flavor inhalation article 10, for example, the length of the filter 14 of the non-combustible heating-type flavor inhalation article 10 along the central axis C may be shorter than that of the filter 14 of the combustible-type flavor inhalation article 10. In the filter 14 of the non-combustible heating-type flavor inhalation article 10, the density and the diameter of the filter plug 22 may be adjusted. In the entire length of the filter 14 of the non-combustible heating-type flavor inhalation article 10, the length in which the filter plug 22 is disposed may be shortened, and a cylindrical portion or another segment having a low filtration rate of mainstream smoke may be disposed in the remaining portion.

The configuration of the filter 14 of the non-combustible heating-type flavor inhalation article 10 is substantially the same as that of the other embodiment except that the length of the filter plug 22 in the direction of the central axis C is shorter.

The non-combustible heating-type flavor inhalation article 10 also exhibits the same effect as that of the combustible-type flavor inhalation article 10. That is, the user can easily crush the capsule 26 in the filter 14 by pressing with fingers or by biting. Therefore, also in the non-combustible heating-type flavor inhalation article 10 heated by the heating device 110, similarly to the combustible-type flavor inhalation article 10, the crushability of the capsule shell 32 can be improved, and the convenience for the user can be improved.

In particular, in the case of the non-combustible heating-type flavor inhalation article 10 in which the rod 12 is heated using the heater 116, since the amount of mainstream smoke is small, the length of the filter plug 22 in the filter 14 tends to be shorter than that in the combustible-type flavor inhalation article 10. According to the heating-type flavor inhalation article 10, the movement of the capsule shell 32 can be prevented by the fine powder 36 even in the filter plug 22 having a short length.

Next, with reference to FIG. 27, a non-combustible, non-heating-type flavor inhalation article (so-called smokeless tobacco) 10 including the filter 14 for a flavor inhalation article will be described.

The flavor inhalation article 10 includes a holder 212, a cartridge 214, and a cap 216.

The holder 212 is formed in a hollow and cylindrical shape similar to the shape and size of a general filter cigarette. The holder 212 has openings 212a and 212b respectively at both ends thereof. A distal end side of the holder 212 is formed in a cylindrical shape having a substantially constant inside diameter and outside diameter. A proximal end side of the holder 212 is formed to be tapered toward the proximal end. A mouthpiece portion 213 is formed at the proximal end of the holder 212. The holder 212 is formed of, for example, a material such as a silicone material, which is soft to such an extent that a user can depress the holder with fingers while suppressing stress. The proximal end side of the holder 212 is thicker than the distal end side. Therefore, a distal end side portion of the holder 212 is easily depressed by the user as compared with a proximal end side portion. The proximal end side portion of the holder 212 exhibits appropriate resilience when the user holds the mouthpiece portion 213.

A hollow cylindrical cartridge 214 is housed in a distal end portion of the holder 212. The cartridge 214 has an outside diameter slightly smaller than the inside diameter of the distal end portion of the holder 212, so that it can be inserted into and removed from the holder 212.

The cartridge 214 includes a cylindrical container 222 having openings 222a and 222b at both ends thereof, and a filling body 224 disposed in the container 222.

Here, the filling body 224 is obtained by filling the container 222 with, for example, shredded or ground tobacco leaves (shreds) or a mixture of granules and an additive (hereinafter referred to as tobacco granules), and gives a predetermined draw resistance to the cartridge 214.

The cartridge 214 has covers 226a and 226b provided on the opening 222a and 222b at both ends of the container 222 so as to house the filling body 224 in the container 222. Each of the covers 226a and 226b has air permeability. The cartridge 214 has a filter retainer 228 and the filter 14 for a flavor inhalation article including the capsule 26 between the filling body 224 and the cover 226b. Therefore, the filling body 224 and the filter 14 are partitioned by the filter retainer 228. In this way, the cartridge 20 is inserted into the holder 212 in a state where the end portion of the container 222 on the filter 14 side faces the mouthpiece portion 213.

The container 222 is formed of, for example, a material such as a silicone material, which is soft to such an extent that a user can depress the container with fingers while suppressing stress.

A cap 216 is removably fitted to the distal end of the holder 212, i.e., the opening 212a of the holder 212 on the side opposite to the mouthpiece portion 213. The cap 216 has a vent 216a.

In the non-combustible, non-heating-type flavor inhalation article 10, an air inhalation path is formed by the vent 216a, the cover 226a having air permeability, the filling body 224, the filter retainer 228, the filter 14, the cover 226b having air permeability, and the mouthpiece portion 213.

When the user inhales from the mouthpiece portion 213 of the holder 212, the air taken into the cartridge 214, that is, a main flow path from the vent 216a, comes into contact with the filling body 224. As a result, the flavor released from the filling body 224 is contained in the air in the cartridge 214. Therefore, the user inhales the air containing the flavor released from the filling body 224 through the main flow path of the holder 212 and the mouthpiece portion 213, and obtains the flavor released from the filling body 224. That is, when the user uses the non-combustible, non-heating-type flavor inhalation article 10, the flavor of the filling body 224 can be obtained by inhalation without requiring ignition.

The user can crush the capsule 26 by pressing the filter 14 from the outside of the holder 212, that is, from the outside of the container 222 of the cartridge 214, toward, for example, the central axis of the holder 212. After crushing the capsule 26, the user obtains the flavor of the filling body 224 and the flavor of the content 34 encapsulated in the capsule 26 by inhalation.

The non-combustible, non-heating-type flavor inhalation article 10 also exhibits the same effect as that of the combustible-type flavor inhalation article 10. That is, the user can easily crush the capsule 26 in the filter 14 by pressing with fingers or by biting. Therefore, also in the non-combustible, non-heating-type flavor inhalation article 10, similarly to the combustible-type flavor inhalation article 10, the crushability of the capsule shell 32 can be improved, and the convenience for the user can be improved.

As described above, according to the embodiment including the above-described modification, it is possible to provide the filter capsule 26 that is used for a flavor inhalation article and is easily crushed by the external force F applied from the outside of the filter 14 by the user, the filter 14 for a flavor inhalation article including the capsule 26, the heating-type flavor inhalation article 10 including the filter 14, the combustible-type flavor inhalation article 10 including the filter 14, and the non-combustible, non-heating-type flavor inhalation article 10 including the filter 14,.

### [Supplementary Notes]

(1) A method of producing a capsule (26) for a filter (14) for a flavor inhalation article, the method comprising:
   forming a capsule shell (32) encapsulating a content (34) therein and having irregularities on an outer surface; and
   depositing in some of recesses (32b) of the capsule shell (32) a fine powder (36) having a visual particle size capable of entering a recess (32b).
(2) The method according to Supplementary Note (1) wherein
   the recess (32b) has a width (Wc) smaller than a fiber width (Wt) of a filter material (22).

The invention of the present application is not limited to the above-described embodiment, and can be variously modified at the implementation stage without departing from the gist thereof. In addition, each embodiment may be carried out in combination as appropriate as possible, and in that case, the combined effect can be obtained. Further, the above-described embodiment includes inventions at various stages, and various inventions can be extracted by an appropriate combination in a plurality of disclosed constitutional requirements.

### REFERENCE SIGNS LIST

10... flavor inhalation article, 12... rod, 14... filter, 16... tipping paper, 22... filter plug, 22a... one end, 22b... the other end, 23... fiber, 24... filter wrapping paper, 26... capsule, 32... capsule shell, 32a... projection, 32b... recess, 34... content, 36... fine powder, 42... resin pipe, 44... through hole, 46... load cell, 46a... pressing portion

## Claims

1. A filter capsule for a flavor inhalation article comprising:
a capsule shell encapsulating a content, and having fine irregularities on an outer surface of the capsule shell; and
a fine powder deposited on a part of the outer surface of the capsule shell,
wherein:
on the outer surface of the capsule shell, a projection and a recess which is adjacent to the projection and is recessed with respect to the projection are repeated at random,
the fine powder is deposited in a part of the recess of the outer surface of the capsule shell,
in the part of the recess in which the fine powder is deposited, a particle size of the fine powder as observed with a microscope is smaller than a depth of the recess with respect to a top of the projection on the outer surface of the capsule shell, and
in a state where the capsule shell with the fine powder deposited on the outer surface is embedded in a filter material of a filter for a flavor inhalation article, the capsule shell is deformed in accordance with an external force applied in a direction intersecting a longitudinal direction of the filter for a flavor inhalation article.

2. The capsule according to claim 1, wherein when the external force is applied, a part of the fine powder is configured to be brought into contact with the filter material.

3. The capsule according to claim 1 or 2, wherein the fine powder is formed of a material that makes it difficult for the filter material to slip with respect to the outer surface of the capsule shell in a state where the filter material is in direct contact with the fine powder.

4. The capsule according to any one of claims 1 to 3, wherein as the fine powder, a material is used which, in a state where the fine powder is in contact with and sandwiched between the recess of the capsule shell and the filter material, increases a frictional force as compared with a case where the recess of the capsule shell and the filter material are in direct contact with each other.

5. The capsule according to any one of claims 1 to 4, wherein the fine powder contains at least one of titanium dioxide, magnesium carbonate, calcium hydrogen phosphate, calcium carbonate, and an alumina silicate compound as a main component.

6. The capsule according to any one of claims 1 to 5, wherein an arithmetic average roughness of the outer surface of the capsule shell becomes greater as an amount of the fine powder deposited on the capsule shell becomes smaller.

7. The capsule according to any one of claims 1 to 6, wherein a Mohs hardness of the fine powder is 2 or more.

8. The capsule according to any one of claims 1 to 7, wherein the particle size of the fine powder is in a range of 0.1 µm to 10 µm.

9. The capsule according to any one of claims 1 to 8, wherein, a surface coverage of the fine powder on the outer surface of the capsule shell is in a range of 10% to 45%.

10. The capsule according to any one of claims 1 to 9, wherein a weight proportion of an element of the fine powder to an element of a main component of the outer surface of the capsule shell identical to the element of the fine powder is in a range of 0.5% to 20%.

11. A filter for a flavor inhalation article comprising:
the filter capsule for a flavor inhalation article according to any one of claims 1 to 10; and
a filter material having one end and the other end, the filter material burying an entire periphery of the outer surface of the filter capsule between the one end and the other end of the filter material.

12. A non-combustible heating-type flavor inhalation article comprising the filter for a flavor inhalation article according to claim 11.

13. A combustible-type flavor inhalation article comprising the filter for a flavor inhalation article according to claim 11.

14. A non-combustible, non-heating-type flavor inhalation article comprising the filter for a flavor inhalation article according to claim 11.
